# EUROPEAN PATENT SPECIFICATION

(11) **EP 1 603 044 B1**
(45) Date of publication and mention of the grant of the patent: **04.05.2016**
(21) Application number: 04707320.0
(22) Date of filing: 02.02.2004
(51) Int. Cl.: G06F 12/14, G06F 12/00, H04L 9/10, G06F 21/10

(54) **TERMINAL DEVICE AND DATA PROTECTION SYSTEM USING THE SAME**
ENDGERÄTEEINRICHTUNG UND DATENSCHUTZSYSTEM DAMIT
DISPOSITIF TERMINAL ET SYSTÈME DE PROTECTION DES DONNÉES DANS LEQUEL IL EST UTILISÉ

(30) Priority: 07.02.2003 JP 2003030841
(43) Date of publication of application: 07.12.2005
(73) Proprietor: Panasonic Intellectual Property Corporation of America, Torrance, CA 90503 (US)
(72) Inventor: NAKAHARA, Tohru, Osaka, 530-0015 (JP); ONODA, Sen'ichi, Osaka, 560-0003 (JP); YAMAMOTO, Masaya, Osaka, 573-1151 (JP); MIURA, Kouji, Osaka, 580-0016 (JP)
(74) Representative: Holmes, Miles Keeton
(86) International application number: PCT/JP2004/001011
(87) International publication number: WO 2004/070612

(56) References cited:
- EP-A- 1 081 575
- EP-A1- 0 715 247
- WO-A-01/67668
- WO-A1-01/14975
- WO-A1-98/35472
- JP-A- 05 347 616
- JP-A- 08 263 438
- JP-A- 11 239 127
- JP-A- 2002 351 722
- JP-A- 2002 351 747
- JP-A- 2002 366 438
- JP-A- 2002 366 913
- US-A1- 2003 018 491
- MATSUSHITA ELECTRIC INDUSTRIAL CO ET AL: "RESPONSE TO DVB CALL FOR PROPOSALS FOR CONTENT PROTECTION & COPY MANAGEMENT TECHNOLOGIES", RM TECHNOLOGY, XX, XX, 19 October 2001 (2001-10-19), pages 1-44, XP002349078,
- HEUVEL VAN DEN S A F A ET AL: "Secure Content Management in Authorised Domains", INTERNATIONAL BROADCASTING CONVENTION, XX, XX, 15 September 2002 (2002-09-15), pages 467-474, XP002273504,
- "Call for proposals for content protection & copy management technologies", INTERNET CITATION , 5 July 2001 (2001-07-05), XP002230687, Retrieved from the Internet: URL:http://www.cptwg.org/Assets/DVB-CPT-Cf P_rev1.2.PDF [retrieved on 2003-02-10]

## Description

### Technical Field

The present invention relates to a terminal device which protects data and to a data protection system. In particular, the present invention relates to a terminal device and a data protection system which protect data using backup.

### Background Art

In recent years, a data distribution system which distributes, from a server device to a terminal device, digital contents such as music, video and game (hereinafter referred to as content) and valuable data such as rights to use the above mentioned contents, via communications such as Internet or digital broadcast, has been developed for practical use.

In general, in the data distribution system, by means of subscription, paying compensation and the like, beneficial data for a user is distributed from a server device to a terminal device, and the data is stored into a storage medium such as a Hard Disk Drive (HDD) held by the terminal device.

However, in the storage medium of the terminal device, due to crash and the like, regardless of the user's fault, data may be destroyed or lost. Data acquired by paying compensation is user's asset. From the standpoint of protecting the user's asset, necessity for protecting data held by the terminal device is increasing. As a method for protecting data, the method to backup data held by a terminal device and decrypt the data using the backuped data is widely known.
WO9835472 discloses an archive system which is intended to serve multiple organisations. This system retains a set of encrypted files and maintains
a mapping to the corresponding encrypted keys for which the source organisation holds the master key. The system has no provisions to archive differently data which is shared by the organisations.
WO01/14975 discloses a backup unit which backs up data from multiple computing units in a telecommunication system. The backup unit does not backs up differently data which is shared by the computing units.

Also, from the standpoint of protecting data distributor's rights and terminal device owner's privacy, a system that does not permit data restoration for a third person is becoming necessary. For example, in the data protection system disclosed in Japanese Laid-Open Patent application No. 2000-124890, a terminal device duplicates data to be backuped, and encrypts the duplicate data using the self-generated terminal device specific key. Moreover, the terminal device stores, into an external storage medium, the encrypted backup data generated by the encryption, the key used for the encryption, and the encrypted backup key encrypted by the public key of the server device. Then, when restoring data, the terminal device acquires the encrypted backup data and the encrypted backup key from the external storage medium, and transmits them to the server device. The server device executes decryption processes on the encrypted backup key and the encrypted backup data, and transmits, to the terminal device, the data restored by the above mentioned processes. In other words, in the above mentioned conventional data protection system, in order to establish the earlier mentioned system which does not permit data restoration for a third person, the terminal device key is encrypted using the public key of the server device. And, for the restoration process on the encrypted backup data, permission by the server device is required. In other words, the server device authorizes the terminal device which requested the process, and accepts the request if the terminal device is valid. Thus, the above mentioned protection of rights and privacy is attempted by avoiding unauthorized restoration.

However, in the conventional data protection system, there is a following problem. In the case where the terminal device executes a restoration process of the encrypted backup data or refers to the details of the encrypted backup data, the terminal device always has to request the above mentioned processes to the server device.

Thus, in the case where a plurality of terminal devices simultaneously request processes accompanying the restoration process to the server device, the load of the server device becomes large, and cannot be processed. Otherwise, there is a problem that the processing time becomes too long. Also, the network might be unnecessarily burdened.

Next, there is a problem that in the terminal device which is in the off-line environment to the server device, the restoration process cannot be executed on the encrypted backup data. In other words, conventionally, the method for executing a restoration process in the terminal device which is in the off-line environment to the server device has not been known.

An object of the present invention, in view of the above mentioned problems, is to provide a terminal device that prevents the encrypted backup data from being illegally restored, reduces the degree of dependence on the server device, and executes restoration.

### Disclosure of Invention

In order to achieve the above mentioned object, the terminal device according to the present invention belongs to a first domain and a second domain, each domain being a group of terminal devices, and comprises: a duplication unit operable to duplicate data shared by the first domain or the second domain so as to generate duplicate data associated with the first domain or the second domain; and a data storage unit operable to associate the duplicate data with the first domain in the case where the data shared by the first domain is duplicated or associate the duplicate data with the second domain in the case where the data shared by the second domain is duplicated, and to store the duplicate data into a storage medium, wherein the data storage unit is operable to associate the duplicate data with the first domain or the second domain by encrypting the duplicate data with a first domain key common to the first domain or a second domain key common to the second domain.

The terminal device according to the present invention also belongs to a first domain that is a group of terminal devices, the terminal device comprising: a key holding unit operable to hold a first domain key common to the first domain; a duplication unit operable to duplicate data shared in the first domain and generate duplicate data; an encryption unit operable to encrypt the duplicate data, using the first domain key held by said key holding unit, and generate encrypted duplicate data; and a data storage unit operable to store the encrypted duplicate data into a storage medium. Preferably, the terminal device further comprises a decryption unit operable to (i) decrypt the encrypted duplicate data stored into the storage medium, using the first domain key held by said key holding unit, and (ii) restore the encrypted duplicate data to the duplicate data.

Thus, the terminal device (i) duplicates data, (ii) encrypts the duplicate data using the first domain key, and (iii) stores the result as encrypted duplicate data into the storage medium. Therefore, the encrypted duplicate data stored into the storage medium can be prevented from being illegally restored by a device which does not belong to the first domain that is a group of terminal devices. Moreover, when the terminal device restores encrypted duplicate data, the encrypted duplicate data can be decrypted using the domain key which has been used for encryption, and restored. Thereby, restoration can be executed without depending on the server device as the conventional example. In other words, the terminal device can execute restoration even in an off-line environment, and processing load on the server device and communication load on the network can be alleviated.

Also, the terminal device further belongs to a second domain which differs from the first domain, wherein said key holding unit further holds a second domain key common to the second domain, said duplication unit duplicates data shared in the first domain or the second domain, and generates the duplicate data associated with the first domain or the second domain, said encryption unit encrypts the duplicate data so as to generate the encrypted duplicate data, using (i) the first domain key in the case where the duplicate data is associated with the first domain, or (ii) the second domain key in the case where the duplicate data is associated with the second domain, and when said decryption unit decrypts the encrypted duplicate data stored into the storage medium, said decryption unit uses the first domain key or the second domain key used for encrypting the duplicate data.

Preferably, when said data storage unit stores, into a storage medium, the encrypted duplicate data generated by said encryption unit, said data storage unit (i) assigns, to the encrypted duplicate data, an identifier for identifying the first or second domain key used for encrypting the duplicate data, and (ii) stores, into the storage medium, the encrypted duplicate data assigned with the identifier, and when said decryption unit decrypts the encrypted duplicate data stored into the storage medium, said decryption unit (i) specifies the first domain key or the second domain key used for encrypting the duplicate data, based on the identifier assigned to the encrypted duplicate data, and (ii) decrypts the encrypted duplicate data using the specified first domain key or second domain key.

Thus, even if the terminal device belongs to the first domain and the second domain, (i) the data shared in the first domain is encrypted using the first domain key, and (ii) the data shared in the second domain is encrypted using the second domain key. Therefore, for example, the encrypted duplicate data of the data shared in the second domain can be prevented from being restored by other terminal devices which only belong to the first domain.

In addition, said duplication unit may delete a part of the duplicate data, according to the details of the duplicate data, and said encryption unit may encrypt the rest of the duplicate data, and generate the encrypted duplicate data. For example, the data shared in each of the first domain and the second domain indicates (i) a content key which is necessary for using a content that is a digital copyrighted work, and (ii) usage rules, and said duplication unit deletes a part indicating the content key in the duplicate data of said data.

Thus, among the duplicate data, for example, the content key part is deleted, and only the usage rules part is backuped. Therefore, the content key which is important data can be certainly prevented from being illegally restored.

Here, the terminal device may further comprise a supplement unit operable to (i) communicate with an external device via a communication line, and (ii) cause the external device to supplement the part deleted by said duplication unit to the data decrypted by said decryption unit.

Thus, for example, the content key is supplemented to the usage rules which have been decrypted by the decryption unit. And, while certainly preventing illegal restoration of the important data, the encrypted duplicate data can be restored to the original duplicate data of prior-delete.

Also, in the case where said decryption unit receives a permission for decrypting the encrypted duplicate data from a server device connected via a communication line, said decryption unit may decrypt the encrypted duplicate data. For example, when said decryption unit decrypts the encrypted duplicate data, said decryption unit (i) inquires the server device whether the encrypted duplicate data can be decrypted or not, and (ii) decrypts the encrypted duplicate data in the case where said decryption unit receives a reply indicating that the encrypted duplicate data can be decrypted.

Thus, when the decryption unit decrypts encrypted duplicate data, the permission from the server device is necessary. And, the illegal data restoration can be certainly prevented.

The present invention can be realized as a data protection system comprising the above mentioned terminal device, a data protection method, and a program.

### Brief Description of Drawings

FIG. 1 is a diagram showing a schematic structure of the overall data protection system according to the first embodiment of the present invention;
FIG. 2 is a functional block diagram showing specific structures of the above mentioned domain management server, network storage, and terminal device;
FIG. 3 is a diagram showing a data structure of a domain management table held by a domain information storage unit of the above mentioned domain management server;
FIG. 4 is a diagram showing a data structure of a domain key management table held by the above mentioned domain key storage unit;
FIG. 5A is a diagram showing a data structure of the data management table held by the data storage unit of the above mentioned network storage;
FIG. 5B is a diagram showing a data structure of the data management table held by the data storage unit of the terminal device;
FIG. 6 is a diagram showing a data structure of the above mentioned license;
FIG. 7 is a diagram showing the content of the message format of the communication message communicated among the above mentioned domain management server, network storage, and terminal device;
FIG. 8 is a diagram showing the structure of the message body of the communication message transmitted to the domain management server when the above mentioned terminal device requests a domain key to the domain management server;
FIG. 9 is a diagram showing the structure of the message body of the communication message transmitted from the domain management server when the above mentioned domain management server transfers the domain key to the terminal device 300;
FIG. 10 is a flow chart showing the above mentioned process of domain key acquisition;
FIG. 11 is a diagram showing the structure of the message body of the transmitted backup request message when the above mentioned terminal device requests storage of the encrypted backup data into the network storage;
FIG. 12 is a diagram showing a structure of the message body of the backup request reply message replied to the terminal device by the network storage in response to the above mentioned request from the terminal device;
FIG. 13 is a flow chart showing the above mentioned backup process;
FIG. 14 is a diagram showing the structure of the message body of the backup data acquisition request message transmitted in order for the above mentioned terminal device to acquire the encrypted backup data stored into the network storage;
FIG. 15 is a diagram showing a structure of the message body of the backup data transmission message which the network storage replies to the terminal device in response to the acquisition request from the above mentioned terminal device;
FIG. 16 is a flow chart showing the above mentioned reference process;
FIG. 17 is a flow chart showing the restoration process of the above mentioned encrypted backup data;
FIG. 18 is a details display diagram showing the details of the above mentioned control information list;
FIG. 19 is a data structure diagram showing the data structure of the above mentioned control information;
FIG. 20 is a structure diagram showing the structure of the data protection system according to the second embodiment of the present invention;
FIG. 21 is a diagram showing the details of the above mentioned usage rules management table;
FIG. 22 is a diagram showing the details of the above mentioned content key management table;
FIG. 23 is a flow chart showing the above mentioned backup process;
FIG. 24 is a diagram showing the data structure of the message body of the data restoration request message transmitted when the above mentioned terminal device requests data supplement to the data supplement server 400;
FIG. 25 is a diagram showing the data structure of the message body of the restored data transmission message transmitted from the above mentioned data supplement server to the terminal device; and
FIG. 26 is a flow chart showing the above mentioned data restoration process.

### Best Mode for Carrying Out the Invention

### (First Embodiment)

Hereinafter, the first embodiment of the present invention will be specifically explained using the drawings.

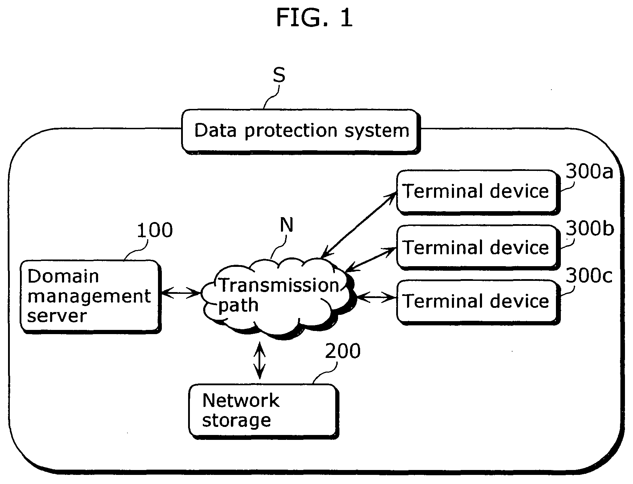

FIG. 1 is a diagram showing a schematic structure of the overall data protection system S according to the first embodiment of the present invention.

The data protection system S is a system which protects data within the possible range in the case where data held by a terminal device is destroyed or lost, and comprises: a domain management server 100 for managing domain; a network storage 200 for storing encrypted backup data; terminal devices 300a, 300b and 300c for holding data to be backuped; and a transmission path N for inter-connecting the above mentioned components.

Here, preceding the specific explanation, the domain according to the present invention is defined.

In a data distribution service, in the case where terminal devices capable of sharing and transferring data with each other exist, this group of terminal devices can be logically grouped. And, the unit to which the above mentioned grouped terminal devices belong is defined as the domain. Also, transferring and sharing data among the terminal devices belonging to different domains are not permitted.

In general, from the standpoint of data right protection of a provider providing a data distribution service, and from the standpoint of a user's privacy protection, the unit to set the domain is determined, and setting the domain for each user as a contractor of data distribution service is a typical example.

In setting the domain, the domain to which only one terminal device belongs may be formed, or one terminal device may belong to two or more domains.

The domain management server 100 is a server device which (i) manages the terminal devices 300a, 300b and 300c belonging to the domain, (ii) generates and manages a domain key set for each domain, and (iii) transmits the domain key to the terminal devices 300a, 300b and 300c. Specifically, the domain management server 100 manages the domain and the domain key, and transmits the domain key to the corresponding one of the terminal devices 300a, 300b and 300c via the transmission path N, based on the request from the terminal devices 300a, 300b and 300c. Also, the above mentioned domain management server 100 can be realized by a workstation and the like.

Here, the domain key means an encryption key of a symmetric key cryptography shared by the terminal devices belonging to the same domain, and used for encryption in time of backuping data, or decryption in time of restoring data. The domain key may be used for the processes of sharing data, transferring data, or authenticating data which are permitted within the same domain.

In the case where the data which needs to be managed securely such as a domain key is communicated, via the transmission path N, among the domain management server 100, the terminal devices 300a, 300b and 300c, in order to ensure security, after Secure Authenticated Channel (hereinafter, referred to as SAC) is established, the data is communicated. For establishing the SAC, for example, Secure Socket Layer (SSL) and Transport Layer Security (TLS) can be used.

The network storage 200, via the transmission path N, stores the encrypted backup data received from the terminal devices 300a, 300b and 300c, or transmits the encrypted backup data, according to the request from the terminal devices 300a, 300b and 300c, to the terminal devices 300a, 300b and 300c. Also, the above mentioned network storage 200 is realized by a workstation and the like.

Specifically, the network storage 200 includes a storage medium such as a Hard Disk Drive (HDD). And, the storage medium is structured, as highly resistant to crash, by tape data backup, Redundant Array of Independent Disks (RAID) and the like.

The transmission path N is a network which inter-connects the domain management server 100, the network storage 200, the terminal devices 300a, 300b and 300c. For example, the transmission path N is communication network such as Internet, digital broadcast, or complex network where the above mentioned networks are combined.

The terminal devices 300a, 300b and 300c have a function of connecting to the transmission path N, and are the devices with which a user uses data such as content in a monitor display, holds data of each domain, backups data, and restores data. Specifically, the terminal devices 300a, 300b and 300c are Set Top Boxes (STBs) for receiving digital broadcast, a digital TV, a Digital Versatile Disk (DVD) recorder, a Hard Disk Drive (HDD) recorder, a content display device such as a Personal Computer (PC), other recorders, or a complex device where the above mentioned devices are combined.

In the above mentioned data protection system S, according to the present embodiment, the flow of the processes in which the terminal devices 300a, 300b and 300c backup data and restore data will be specifically explained using the drawings.

Here, the domain identifier means the information for uniquely specifying the domain in the data protection system S. Also, the terminal identifier means the information for uniquely specifying the terminal device in the data protection system S. The present embodiment will be explained setting the terminal identifier of the terminal device 300a as "TERMINAL-ID-0001". In addition, the present embodiment hereinafter will be explained assuming that the terminal identifier is stored into each ROM of the terminal devices 300a, 300b and 300c.

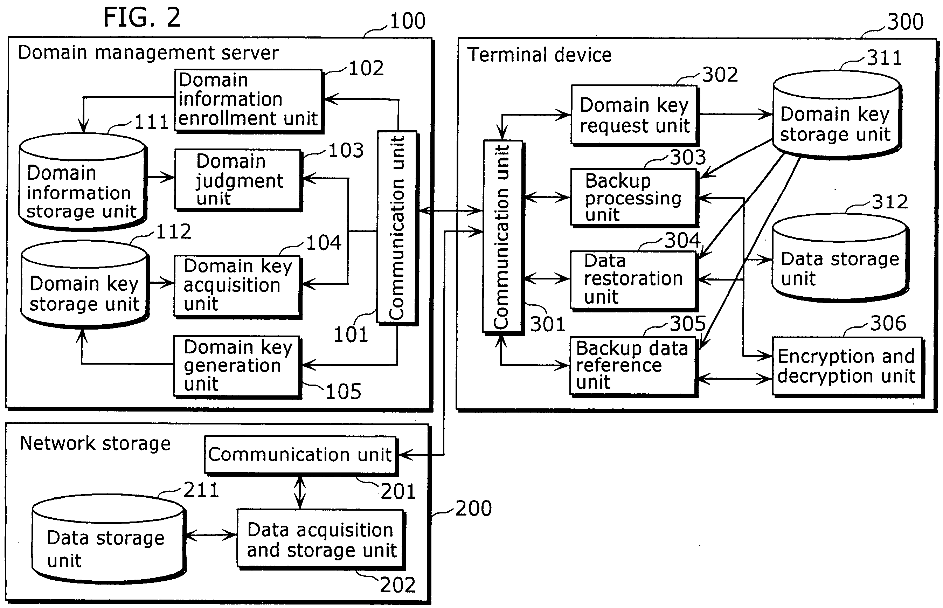

FIG. 2 is a functional block diagram showing specific structures of the domain management server 100, the network storage 200, and the terminal devices 300a, 300b and 300c as shown in FIG. 1. In FIG. 2, the terminal device 300a represents the functional structures of the terminal devices 300a, 300b and 300c, and drawn as the terminal device 300.

First, the specific structure of the domain management server 100 will be explained. The domain management server 100 includes: a domain information storage unit 111 for storing domain information; a domain key storage unit 112 for storing a domain key; a communication unit 101 for communicating with the terminal device 300; a domain information enrollment unit 102 for enrolling the domain information in the domain information storage unit 111; a domain judgment unit 103 for judging the domain to which the terminal device 300 belongs; the domain key acquisition unit 104 for acquiring the domain key from the domain key storage unit 112; a domain key generation unit 105 for generating a domain key.

Next, the specific structure of the network storage 200 will be explained. The network storage 200 includes: a data storage unit 211 for storing data; a communication unit 201 for communicating with the terminal device 300; a data acquisition and storage unit 202 for enrolling data into the data storage unit 211, acquiring data via the communication unit 201, and acquiring data from the data storage unit 211.

Finally, the specific structure of the terminal device 300 will be explained. The terminal device 300 includes: a domain key storage unit 311 for storing the domain key acquired from the domain management server 100; a data storage unit 312 for storing data held by the terminal device 300 for each domain; a communication unit 301 for communicating with the domain management server 100 and the network storage 200; a domain key request unit 302 for generating a domain key request message, and requesting domain key acquisition to the domain management server 100; a backup processing unit 303 for generating backup data and transmitting encrypted backup data whose backup data has been encrypted to the network storage 200; a data restoration unit 304 for acquiring the encrypted backup data from the network storage 200, and restoring the encrypted backup data; a backup data reference unit 305 for acquiring the encrypted backup data from the network storage 200, and providing details of the backup data to a user; and an encryption and decryption unit 306 for encrypting backup data and decrypting the encrypted backup data.

Each component (storage unit), for storing data such as the domain key storage unit 311, which forms the above mentioned domain management server 100, the network storage 200, and the terminal device 300 can be realized by a storage medium such as an HDD. Also, the components other than the above mentioned storage unit (for example, the domain key request unit 302 and the like) forming the domain management server 100, the network storage 200 and the terminal device 300 can be realized by a program and the like executed using hardware such as Large Scale Integration (LSI), CPU, RAM and ROM. In the terminal device 300, it is desirable that each component is tamper-resistant both in the hardware and software.

Here, the data and data structure used in the present embodiment will be explained. First, the data structure of the data held by each storage unit will be explained in the order of the domain management server 100, the network storage 200, and the terminal device 300. Finally, an example of data to be backuped according to the present embodiment will be explained. Furthermore, a license which is an example of data to be backuped and the data structure of the license will be explained.

### <Data held by each storage unit of the domain management server 100>

First, data held by each storage unit of the domain management server 100 will be explained in reference to the drawings.

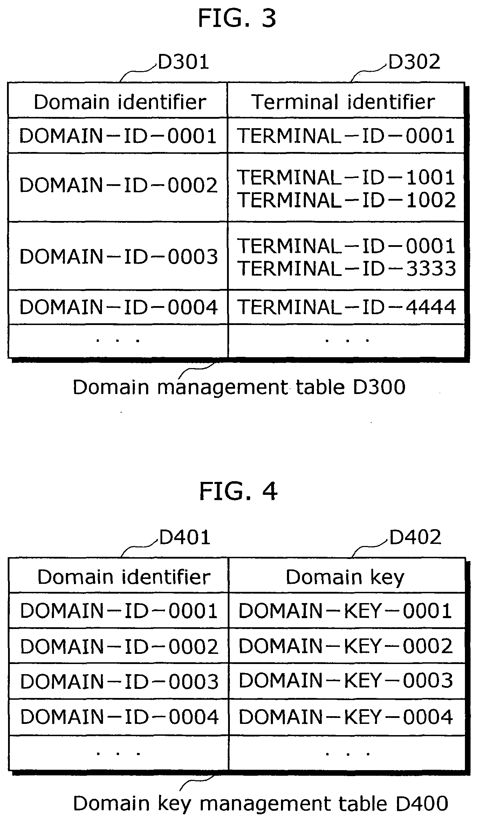

FIG. 3 is a diagram showing a data structure of the domain management table held by the domain information storage unit 111 of the domain management server 100.

The domain information storage unit 111 is a data base which holds a domain management table D300 for managing information regarding domain. And, the domain management table D300 associates the domain with the terminal device 300 belonging to the domain. Specifically, the domain information storage unit 111 includes the domain management table D300 as shown in FIG. 3, and manages a domain identifier D301 and a terminal identifier D302.

For example, in the domain management table D300 as shown in FIG. 3 indicates that the terminal device 300a whose terminal identifier D302 is "TERMINAL-ID-0001" belongs to the domain whose domain identifier D301 is "DOMAIN-ID-0001".

Also, the domain management table D300 indicates that the two terminal devices 300 whose terminal identifier D302s are "TERMINAL-ID-1001" and "TERMINAL-ID-1002" belong to the domain whose domain identifier D301 is "DOMAIN-ID-0002".

In addition, the domain management table D300 indicates that the two terminal devices 300 whose terminal identifiers D302 are "TERMINAL-ID-0001" and "TERMINAL-ID-3333" belong to the domain, "DOMAIN-ID-0003". And, the domain management table D300 indicates that the terminal device 300a whose terminal identifier D302 is "TERMINAL-ID-0001" belongs to the domain whose domain identifier D301 is "DOMAIN-ID-0001" and the domain whose domain identifier D301 is "DOMAIN-ID-0003".

FIG. 4 is a diagram showing the data structure of the domain key management table held by the domain key storage unit 112.

The domain key storage unit 112 is a data base which holds a domain key management table D400 for managing a domain key used for encryption process of backup data and decryption process of encrypted backup data. The domain key management table D400 is used to acquire the domain key of the domain associated with the terminal identifier included in the domain key acquisition request, in the case where the domain key is transmitted in response to the domain key acquisition request from the terminal device 300. Specifically, the domain key storage unit 112 includes the domain key management table D400 as shown in FIG. 4, and manages a domain identifier D401 and a domain key D402.

For example, the domain key management table D400 as shown in FIG. 4 indicates that the domain key used by the terminal device 300 which belongs to the domain whose identifier D401 is "DOMAIN-ID-0001" is "DOMAIN-KEY-0001".

The data enrollment into the domain information storage unit 111 and the domain key storage unit 112 is executed on-line through the domain enrollment display, by the user owning the terminal device 300, via the transmission path N, connecting to the Web site (the domain management server 100) of the provider who administers the data distribution service. Also, the data enrollment may be executed off-line by using a postcard for enrollment, and the like.

In the domain new enrollment process, first, the provider assigns the domain identifier D301 to the user, and the domain key generation unit 105 generates the domain key associated with the assigned domain identifier D301. The domain key generation unit 105 associates the domain identifier D401 with the domain key D402, and enrolls in the domain key management table D400 of the domain key storage unit 112.

After that, the terminal device 300 informs the terminal identifier D302, on-line or off-line, to the provider (the domain management server 100). And, the domain information enrollment unit 102 of the domain management server 100 associates the domain identifier D301 with the terminal identifier D302, and enrolls into the domain management table D300 of the domain information storage unit 111. As a result of the above mentioned domain new enrollment process, the domain management table D300 of the domain information storage unit 111 is established.

Similarly, in the process to add the terminal device 300 to the domain, the user (terminal device 300) connects to the Web site (the domain management server 100) of the provider, and transmits through the additional display to the terminal device, the domain identifier of the domain and the terminal identifier of the terminal device 300 to be added. Thus, the domain information enrollment unit 102 can be realized by adding the terminal identifier transmitted as described above to the terminal identifier D302 associated with the domain identifier D301 of the domain management table D300 of the domain information storage unit 111.

### <Data held by the storage unit of the network storage 200>

Next, the data held by the storage unit of the network storage 200 will be explained in reference to the drawings.

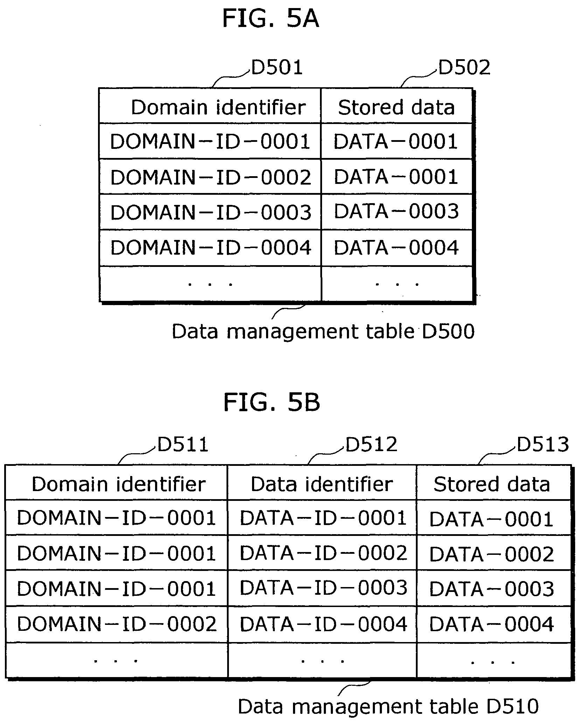

FIG. 5A is a diagram showing a data structure of the data management table held by the data storage unit 211 of the network storage 200.

The data storage unit 211 is a data base for managing encrypted backup data, and used for storing the received encrypted backup data, and transmitting the encrypted backup data associated with the domain identifier included in the backup data acquisition request.

Specifically, the data storage unit 211 holds a data management table D500 as shown in FIG. 5A. And, the data management table D500 associates a domain identifier D501 with a stored data D502.

For example, the data management table D500 as shown in FIG. 5A indicates that the stored data D502, "DATA-0001", is stored as encrypted backup data in the domain whose domain identifier D501 is "DOMAIN-ID-0001".

### <Data held by the storage unit of the terminal device 300>

The domain key storage unit 311 of the terminal device 300 is a data base for managing the domain key used for encryption process and decryption process of backup data, and used for storing the domain key acquired from the domain management server 100. Specifically, the domain key storage unit 311 holds the similar table to the domain management table D400 held by the domain key storage unit 112.

FIG. 5B is a diagram showing a data structure of the data management table held by the data storage unit 312 of the terminal device 300.

The data storage unit 312 is a data base for managing the data held by the terminal device 300 for each domain, and holds a data management table D510 as shown in FIG. 5B. And, the data management table D510 associates a domain identifier D511, a data identifier D512 and a stored data D513 with each other.

Here, the data identifier D512 is the information which can uniquely specify data depending on the combination with the domain identifier D511. For example, the data management table D510 as shown in FIG. 5B indicates that "DATA-0001" is stored as the stored data D513 whose data identifier D512 corresponds to "DATA-ID-0001" and domain identifier D511 is "DOMAIN-ID-0001".

Here, the data management method used in the data storage unit 312 in the case where the terminal device 300 belongs to two or more domains will be explained. According to the above mentioned definition of the domain, the data held by the terminal device 300 needs to be managed separately for each domain. That is because in the case where the terminal device 300a belongs to the two domains α and β, the terminal device 300b belongs to the domain α, and the terminal device 300c belongs to the domain β, unless the data is managed separately for each domain, the data held by the terminal device 300b can be transferred to the terminal device 300c via the terminal device 300a. This contradicts the definition of the domain which does not permit the data transfer among the terminal devices belonging to different domains.

The data enrollment into the data storage unit 312 can be executed by acquiring from the server device via the transmission path N, acquiring from the package media, and the like. However, the explanation will be omitted because this is not essential in the present invention.

However, the data storage needs to be executed for each domain. When data is stored into the data storage unit 312, the data has to be stored as the data belonging to at least one of the domains. Which domain the data belongs to may be determined by any one of the timings such as the timing of the data request when the terminal device 300 requests data, the timing of the data distribution on the data distributing side, and the timing of the data acquisition when the terminal device 300 acquires data. For the above mentioned reasons, the terminal device 300 manages data for each domain, and executes a data backup process and a data restoration process for each domain.

Finally, according to the present embodiment, a license which is an example of data that is held by the data storage unit 312 and is to be backuped, and the data structure of the license will be explained.

The license is one of the data used in a content distribution system which is a representative example of a data distribution system. Here, the content distribution system will be briefly explained.

The content distribution system is a system where content is distributed, via communication such as Internet, digital broadcast and the like, from a server device to a terminal device, and the content can be used in the terminal device. In order to protect copyright of the content and prevent the unauthorized use of the content by a malicious user and the like, copyright protection technique is used.

The copyright protection technique is, specifically, a technique which securely controls the content use such as a user's reproduction of content and copying content to a recording medium, using an encryption technique and the like. For example, there is a system where (i) a server device generates a license including usage rules such as the reproduction number of content that can be used in a terminal device, and distributes the license to the terminal device, and (ii) the terminal device decrypts the separately acquired encrypted content using a content key of the license, and controls the content use based on the usage rules.

In general, the content key and the license are assigned per content, and associated with a content identifier. Here, the content identifier is the information for uniquely specifying content in the content distribution system. The present embodiment will be explained assuming that the license is assigned per content.

As described above, the content distribution system and license have been explained.

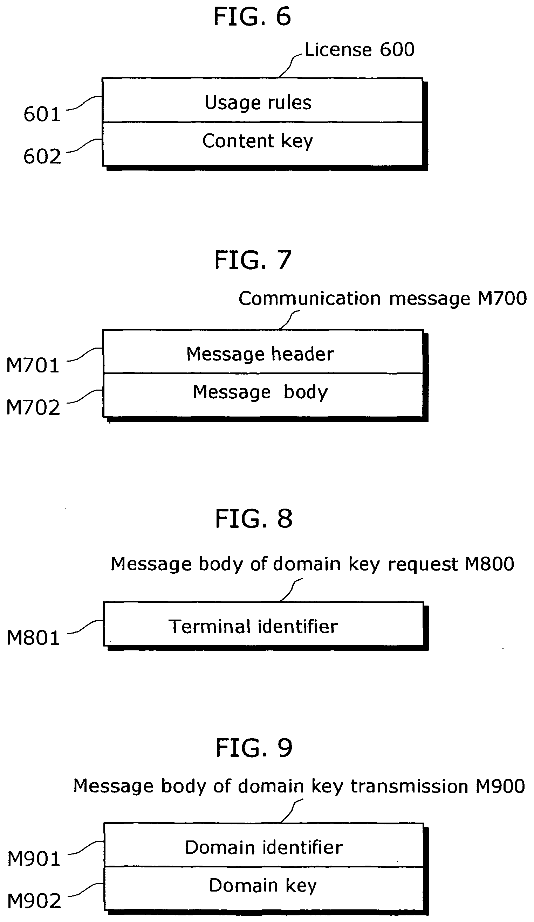

Next, the data structure of the license will be explained in reference to FIG. 6.

FIG. 6 is a diagram showing the data structure of the license.

A license 600 includes usage rules 601 made of the information regarding content use permission, and a content key 602 for decrypting the encrypted content associated with the license 600. Here, the usage rules 601 are the number of times that the content can be used, associated with the license 600 such as "101 times", the period when the content can be used such as "from December 1, 2002 to February 13, 2003".

The license 600 needs to be associated with the content identifier in the process related to the data storage unit 312 and the license 600. For example, in order to omit the process of associating the license 600 with the content identifier in the terminal device 300, the content identifier may be included in advance.

As described above, the data structure of the license has been explained.

Here, the types of data stored into the data storage unit 312 by the terminal device 300 will be explained. As the data held by the terminal device 300, there are (i) the data whose content should be referred to by the user, and (ii) the data whose content needs not be recognized, or should not be referred to. The former data is the readable information that can be, at least, provided to the user, and in the above mentioned example of license, the usage rules apply to this. The latter data is the information which is used mainly for control and the like, and in the above mentioned example of license, the content key applies to this. The content key is a typical example of the data which should not be referred to by the user.

As described above, the data structure of the data used in the first embodiment has been explained.

Here, the process needed for data protection in the data protection system S will be explained.

First, in order to protect data, a backup process of the data held by the terminal device 300 and a data restoration process based on the backuped data are necessary. Also, according to the present invention, in the backup process and data restoration process, it is necessary to acquire a domain key in advance. In addition, the case where the process in which the data details of the backuped data is necessary is supposed. For example, in the case where the data to be protected is a license, the case where the usage rules of the backuped license is supposed.

In the data protection system S structured as described above, the process in the case where the terminal device 300 acquires a domain key from the domain management server 100, the process in the case where the terminal device 300 backups data, the process in the case where the terminal device 300 refers to the content of the backed data, and the process in the case where the terminal device 300 restores the encrypted backup data will be explained in such order as described above, referring to the drawings.

Preceding the explanation for each process, the communication message used in the first embodiment will be explained.

FIG. 7 is a diagram showing the content of the message format of the communication message communicated in the communication among the domain management server 100, the network storage 200 and the terminal device. The communication message M700 as shown in FIG. 7 includes a message header M701 and a message body M702.

Here, the message header M701 includes, at least, the information for specifying the sending destination and the information for specifying the sending source. The information for specifying the sending source is referred to as the destination address of the message. And, the information for specifying the sending source is referred to as the destination address when replying to the message. As a typical example of the information for specifying the sending source or the sending destination, there is an IP address. Also, the information needed for the authentication process may be included in the message header M701. In such case as described above, the authentication process can be executed among the data management server 100, the network storage 200 and the terminal device 300 which communicate the communication message M700.

On the other hand, the message body M702 includes specific information in each communication message M700.

### <Domain key acquisition process>

First, the above mentioned domain key acquisition process will be explained.

The data structure of the communication message M700 related to the domain key acquisition process will be explained referring to FIG. 8 and FIG. 9.

FIG. 8 is a diagram showing the structure of the message body M702 of the communication message M700 transmitted to the domain management server 100.

As shown in FIG. 8, the message body M702 is structured as a message body M800 of domain key request, and the message body M800 of domain key request includes a terminal identifier M801.

FIG. 9 is a diagram showing the structure of the message body M702 of the communication message M700 transmitted from the domain management server 100 in the case where the domain management server 100 transmits the domain key to the terminal device 300.

As shown in FIG. 9, the message body M702 is structured as the message body M900 of domain key transmission. And, the message body M900 of domain key transmission includes a domain identifier M901 and a domain key M902.

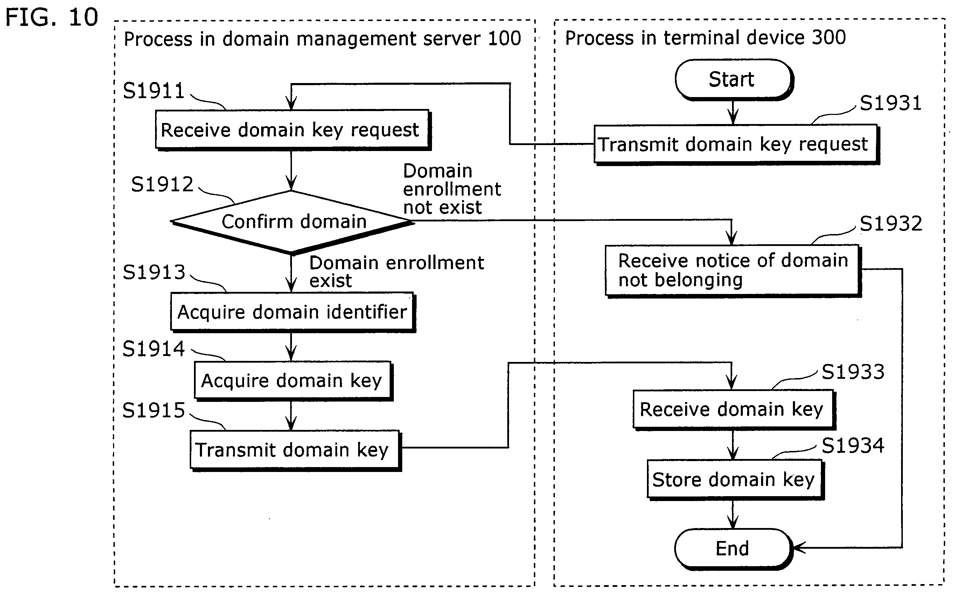

As described above, the data structure of the communication message M700 related to the domain key acquisition process has been explained. Next, the process of each unit leading to that the terminal device 300 acquires the domain key from the domain management server 100 will be explained referring to FIG. 10.

FIG. 10 is a flow chart showing the domain key acquisition process.

The terminal device 300 starts the domain key acquisition process according to the user's domain key acquisition direction to the terminal application. In other words, the terminal application which received the domain key acquisition direction gives the domain key acquisition direction to the domain key request unit 302.

The domain key request unit 302 generates, as the message body M702, the communication message M700 (domain key request message) including the message body M800 of domain key request, and transmits the communication message M700, via the communication unit 301, to the domain management server 100 (step S1931). The terminal identifier M801 included in the domain key request message M800 is a terminal identifier acquired from ROM of the terminal device 300. Here, "TERMINAL-ID-0001" is included as the terminal identifier M801.

The domain management server 100 receives the domain key request message via the communication unit 101 (step S1911). The domain judgment unit 103 (i) extracts the terminal identifier M801 from the message body M800 of domain key request, (ii) detects the terminal identifier M801 from the domain management table D300 of the domain information storage unit 111, and confirms whether or not the terminal device 300 is written in the domain (step S1912).

As a result of the detection, in the case where the terminal identifier M801 does not exist, the communication message M700 (reply message) including the message body M702 which indicates non-belonging to the domain is transmitted to the terminal device 300. After the terminal device 300 receives the reply message (step S1932), the terminal device 300 presents the reception to the user, and ends the process.

As a result of the detection, in the case where the terminal identifier M801 exists, the domain judgment unit 103 specifies and acquires the domain identifier D301 of the domain to which the terminal device belongs (step S1913).

Also, in the case where the terminal device 300 belongs to a plurality of domains, a plurality of domain identifiers hit due to the above mentioned detection. In such case as described above, the following processes (the processes from the step S1913) are executed for each domain identifier. The communication message M700 (domain key transmission message) including the list of pairs of the domain key and the domain identifier in the message body M702 may be transmitted. Also, the communication message M700 (reply message) including the plurality of domain identifiers which have hit in the message body M702 may be transmitted to the terminal device 300, and the following processes (the processes from the step S1913) may be executed after causing the user to select one domain identifier.

The domain key acquisition unit 104 detects the domain identifier acquired in the step S1913 from the domain identifier D401 included in the domain key management table D400 of the domain key storage unit 112. Then, the domain key acquisition unit 104 specifies and acquires the domain key D402 of the domain associated with the domain identifier (step S1914).

The domain key acquisition unit 104 includes, in the message body M702, the domain identifier acquired in the step S1913 and the domain key acquired in the step S1914. And, the domain key acquisition unit 104 generates a communication message M700 (message of domain key transmission) by adding the message header M701 to the message body M702, and transmits, via the communication unit 101, to the terminal device 300 (step S1915).

When the terminal device 300 receives the domain key transmission message via the communication unit 301 (step S1933), the domain identifier and domain key included in the domain key transmission message are extracted, and stored into the domain key storage unit 311 by associating the domain identifier and domain key (step S1934).

In the case where the terminal device 300 belongs to a plurality of domains, the terminal device 300 may acquire the domain key associated with the domain selected by the user from the domain management server 100, and store in the domain key storage unit 311 by associating the acquired domain key with the above mentioned domain identifier of the domain. In such case as described above, the terminal device 300 (i) stores the domain identifier of the domain selected by the user into the domain key request message, (ii) transmits the domain identifier to the domain management server 100, and (iii) temporarily stores the domain identifier. Then, the terminal device 300 associates the above mentioned temporarily stored domain identifier with the domain key acquired from the domain management server 100.

As described above, the processes leading to that the user gives the domain key acquisition direction, and the terminal device 300 acquires the domain key from the domain management server have been explained.

### <Data backup process>

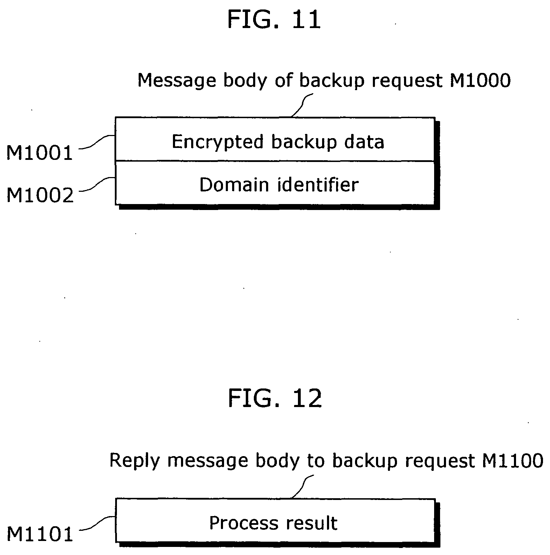

Next, the process in the case where the terminal device 300 backups data will be explained referring to the drawings. First, the data structure of the message body M702 of the communication message M700 related to the process in time of backup will be explained, referring to FIG. 11 and FIG. 12.

FIG. 11 is a diagram showing the structure of the message body M702 of the communication message M700 (backup request message) transmitted in the case where the terminal device 300 requests the network storage 200 to store the encrypted backup data.

As shown in FIG. 11, the message body M702 is structured as the message body of backup request M1000. And, the message body of backup request M1000 includes: encrypted backup data M1001 whose backup data is encrypted; and a domain identifier M1002.

FIG. 12 is a diagram showing the structure of the message body M702 of the communication message M700 (reply message to backup request) which is replied by the network storage 200 to the terminal device 300, in response to the request from the terminal device 300.

As shown in FIG. 12, the message body M702 is structured as the reply message body M1100 to backup request. And, the reply message body M1100 to backup request includes the process result M1101 indicating the result of the process executed by the network storage 200 in response to the request from the terminal device 300.

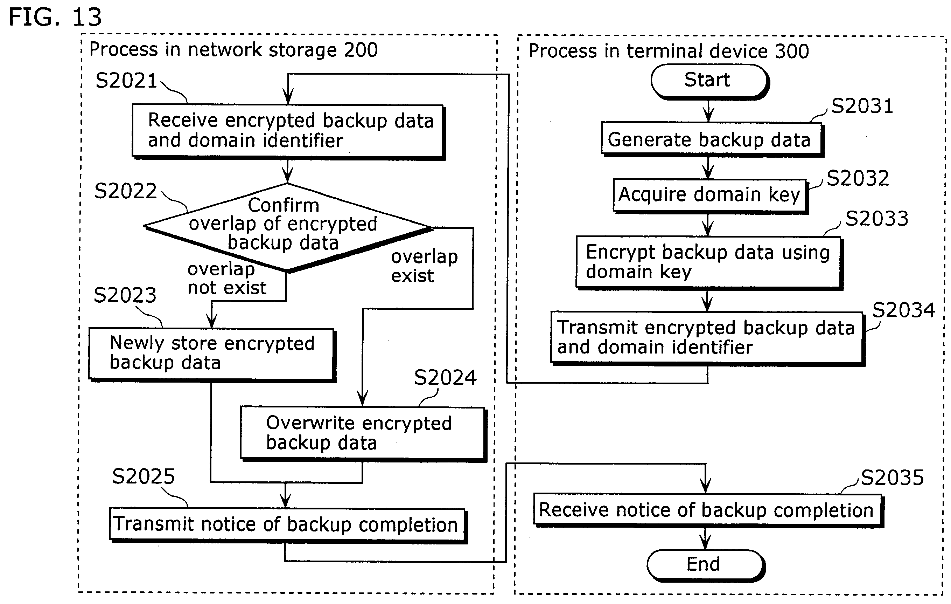

As described above, the data structure of the communication message M700 related to the backup process has been explained. Next, the process in which the terminal device 300 backups self-held data, that is, the process in which the data to be backuped is duplicated, encrypted, and stored into the network storage 200 will be explained, referring to FIG. 13.

FIG. 13 is a flow chart showing the backup process.

The terminal device 300 starts the backup process on the data held by the terminal device 300, according to the user's backup direction to the terminal application. In other words, the terminal application which received the backup direction from the user gives the backup direction to the backup processing unit 303.

Here, in the case where the terminal device 300 belongs to two or more domains, the user inputs the information for specifying to which domain the data to be backuped corresponds. Here, the process is explained, assuming that the domain identifier is inputted. Also, in the case where only a part of the data associated with the domain is backuped, the information for further limiting data is inputted. The above mentioned domain identifier and the information for limiting data are defined as the information for limiting the data to be backuped.

First, the backup processing unit 303 (i) specifies and duplicates data to be backuped from the data stored into the data storage unit 312, based on the information for limiting the data to be backuped, and (ii) generates backup data (step S2031).

The backup processing unit 303 acquires the domain key from the domain key storage unit 311 (step S2032).

Here, in the case where two or more domain keys exist in the domain key storage unit 311, the domain key is specified and acquired making the above mentioned domain identifier as the key. Also, in the case where only one domain key exists in the domain key storage unit 311, the backup processing unit 303 may execute confirmation using the above mentioned domain identifier. In addition, in the case where the domain key is not stored into the domain key storage unit 311, the terminal device 300 acquires the domain key, following the flow of the domain key acquisition process as described above.

The backup processing unit 303 transmits the backup data generated in the step S2031 and the domain key acquired in the step S2032 to the encryption and decryption unit 306.

The encryption and decryption unit 306 (i) encrypts the received backup data using the domain key, (ii) generates the encrypted backup data (step S2033), and (iii) transmits the data to the backup processing unit 303.

The backup processing unit 303 generates the above mentioned backup request message, and transmits, via the communication unit 301, to the network storage 200 (step S2034). The domain identifier M1002 included in the message body of backup request M1000 is the domain identifier associated with the domain key acquired in the step S2032.

The network storage 200 receives, via the communication unit 201, the above mentioned backup request message (step S2021). The data acquisition and storage unit 202 (i) extracts the domain identifier M1002 from the message body M1000 of backup request, (ii) detects the domain identifier M1002 from the data management table D500 of the data storage unit 211, and (iii) confirms the existence or non-existence of the stored data D502 which is the encrypted backup data of the domain associated with the domain identifier M1002 (step S2022). In the case where the encrypted backup data of the domain associated with the domain identifier M1002 does not exist, the data acquisition and storage unit 202 generates a new record and stores the encrypted backup data M1001 (step S2023). In the case where encrypted backup data of the domain associated with the domain identifier M1002 exists, the encrypted backup data M1001 is overwritten into the existing record of encrypted backup data (step S2024).

After the backup process is completed, the data acquisition and storage unit 202 generates the reply message to backup request including the process result M1101 which indicates the completion of the backup process, and transmits, the reply message to backup request, to the terminal device 300 (step S2025). Also, in the case where the backup process is not completed for some reason, the data acquisition and storage unit 202 transmits, to the terminal device 300, the reply message to backup request including the process result M1101 which indicates the abnormal end.

The terminal device 300 receives the reply message to backup request (step S2035), and for example, presents the content of the received process result M1101 to the user.

### <First Variation of the backup process: additional data>

Here, in the case where the terminal device 300 encrypts the backup data and stores the encrypted backup data into the network storage 200 as described above, the following processes may be executed.

In other words, the terminal device 300 adds additional data to the encrypted backup data. The additional data indicates information regarding the restoration permission control, for example: a restoration expiration date indicating the period for which restoration is possible; a backup processing time indicating the time of backup; a data version of the backup data; reference specific data used for referring to encrypted backup data; an encryption algorithm identifier for identifying the encryption algorithm of the backup data; a terminal identifier of the terminal device 300 which has executed backup; or a server identifier indicating the data distribution server which is the source of the backup data.

In the case where the additional data indicates the restoration expiration date, the terminal device 300, for example, based on the direction from the server of the provider who administers the data distribution server, (i) generates the additional data indicating the restoration expiration date, and (ii) adds the additional data to the encrypted backup data. Here, in the case where the backup data includes a plurality of licenses, the terminal device 300 may generate additional data indicating the longest or the shortest period among the restoration expiration dates of the plurality of licenses. Specifically, in the case where the terminal device backups the license whose restoration expiration date is "valid until February 13, 2003", the license whose restoration expiration date is "valid until March 14, 2003", and the license whose restoration expiration date is "valid until March 25, 2003", the terminal device 300 generates the additional data indicating the shortest restoration expiration date, "February 13, 2003", or the additional data indicating the longest restoration expiration date, "March 25, 2003".

In the case where the additional data indicates the backup processing time, the terminal device 300 (i) encrypts the backup data, (ii) specifies the time when the encrypted backup data was generated, (iii) generates additional data using the specified time as the above mentioned backup processing time, and (iv) adds the additional data to the encrypted backup data.

In the case where the additional data indicates the data version, the terminal device 300 (i) counts the generation frequency of the encrypted backup data, (ii) generates the additional data using the count value as the data version, and (iii) adds the additional data to the encrypted backup data.

In the case where the additional data indicates the reference specific data, the terminal device 300 (i) generates the additional data using, for example, the content in which the usage rules are described in clear text as the above mentioned reference specific data, and (ii) adds the additional data to the encrypted backup data.

In the case where the additional data indicates the encryption algorithm identifier, the terminal device 300 (i) generates the additional data using the identifier, as the above mentioned encryption algorithm identifier, said identifier indicating the symmetric key cryptography algorithm such as Advanced Encryption Standard (AES), Triple Data Encryption Standard (DES), and (ii) adds the additional data to the encrypted backup data. Here, as the encryption algorithm, the symmetric key cryptography algorithm such as AES and Triple DES is general. In the case where in the data protection system S, a plurality of encryption algorithms are supported, it is necessary to add the information regarding the encryption algorithm which has been encrypted to the encrypted backup data.

In the case where the additional data indicates a terminal identifier, the terminal device 300 (i) reads out the terminal identifier memorized in the self-held ROM, (ii) generates additional data indicating the terminal identifier, and (iii) adds the additional data to the encrypted backup data.

In the case where the additional data indicates a server identifier, the terminal device 300 acquires, in advance, from the server where the original data for the backup data is outputted, that is, the server which distributes the data, a server identifier (for example, Uniform Resource Locator (URL) and location information) along with the data. Then, when the terminal device 300 generates encrypted backup data from the above mentioned data, the terminal device 300 generates additional data indicating the server identifier, and adds the additional data to the encrypted backup data.

According to the present embodiment, it is explained that the additional data indicating the restoration expiration date and the like is generated by the terminal device 300. However, the above mentioned additional data may be generated by the network storage 200 in time of backup, and in time of receiving a message of backup data acquisition request.

Also, in the step S2024 in FIG. 13, in the case where the encrypted backup data associated with the domain identifier M1002 exists, according to the present embodiment, it is explained that the encrypted backup data is overwritten. However, if a data version or a backup processing time is added, as additional data, to the already existing encrypted backup data, the new encrypted backup data M1001 to which the similar additional data is added can be additionally stored without being overwritten.

### <Second Variation of the backup process: backup domain data>

Also, the terminal device 300 acquires data held by the other terminal devices 300 which belong to the same domain, and generates encrypted backup data based on the acquired data.

For example, in the case where the terminal device 300 holds the data DA, DB and DC, and the other terminal devices 300 hold the data DB, DC and DD, the terminal device 300 acquires the data DB, DC and DD from the other terminal devices 300, and generates encrypted backup data of the data DA, DB, DC and DD. Otherwise, the terminal device 300 generates encrypted backup data of the data DB and DC which overlap between the data acquired from the other terminal devices 300 and the self-held data.

Here, the backup process of the overlapping data will be explained.

In the case where the data to be backuped is a license, "data overlaps" means, that the content identifier which corresponds to each license is identical. And, when a plurality of licenses overlap, that is, when the identical content identifier corresponds to a plurality of licenses, the terminal device 200 may use one of the licenses as backup data.

Here, in the case where a plurality of licenses overlap, but the contents are different, for example, in the case where the usage rules included in the licenses are different, the terminal device 300, according to the predetermined control rules, selects one of the licenses as backup data. Such predetermined control rules as described above are, for example, (i) to select a license which is advantageous for the user regarding the usage rules, (ii) to select a license which is advantageous for the provider, and the like. Also, the above mentioned control rules are set in the terminal device 300 when delivering the terminal device 300, or set in the terminal device 300 by the transmission from the provider's server. For example, the license of the reproduction permission number "twice" as usage rules overlaps with the license of the reproduction permission number "five times", and the above mentioned control rule (i) is set in the terminal device 300, the terminal device 300 selects the license of the reproduction permission number "five times" as backup data. In addition, in the case where the above mentioned control rule (ii) is set in the terminal device 300, the terminal device 300 selects the license of the reproduction permission number "twice" as backup data.

### <Third Variation of backup process: store into a plurality of storages>

Also, the terminal device 300 stores the generated encrypted backup data into different network storages 200, according to the data type. In other words, the data protection system S comprises a plurality of network storages 200 whose security levels are different. When the terminal device 300 encrypts the license which is the backup data by separating into the usage rules and content key, the terminal device 300 (i) stores the encrypted backup data indicating the usage rules into the network storage 200 of low security level, and (ii) stores the encrypted backup data indicating the content key into the network storage 200 of high security level. In addition, the terminal device 300, regardless of the data type, may divide one encrypted backup data, and disperse and store the divided data into a plurality of network storages 200. In the case where the encrypted backup data is dispersed and stored as described above, if one of the dispersed data cannot be acquired, the original backup data cannot be restored.

### <Fourth Variation of backup process: associate with a plurality of storages>

Also, in the case where the self-held data is associated with a plurality of domains, the terminal device 300 (i) duplicates the data as many as the number of the domains, (ii) encrypts each backup data using the domain key which corresponds to each domain, and (iii) generates a plurality of encrypted backup data.

Otherwise, in the case where the self-held data is associated with a plurality of domains, the terminal device 300 may (i) duplicate only one data, (ii) encrypt the backup data using the domain key which corresponds to one of the plurality of domains, and (iii) generate one encrypted backup data. In such case as described above, the terminal device 300 (i) specifies, from a plurality of domains, the domain according to the user's operation, or based on the control from the domain management server 100, and (ii) uses the domain key associated with the domain for the above mentioned encryption.

### <Fifth Variation of backup process: separately encrypt>

In the above mentioned explanation, regardless of the usage rules and content key which are components of the license that is backup data, the usage rules and content key are encrypted and backuped together. However, the usage rules and content key may be separately encrypted. Specifically, the usage rules may be encrypted using the domain key, and the content key may be encrypted using the symmetric key cryptography set for each terminal device 300, and the like. In such case as described above, the details of the usage rules can be referred to, if the terminal device 300 exists in the domain, but the data restoration process can be executed only in the terminal device 300 which executed backup process.

Also, in the case where the usage rules are encrypted using the domain key, and the content key is encrypted using the public key of the domain management server 100, the details of the usage rules can be referred to in the terminal device 300 within the domain, the data restoration process of the content key needs to be requested to the domain management server 100. Thus, the permission and non-permission of the data restoration can be controlled by the domain management server 100.

### <Sixth Variation of backup process: signature>

Moreover, the application such as "the content key needs to be encrypted as the data itself needs to be protected, but the usage rules need not be encrypted if the usage rules are not tampered" is conceivable. In such case as described above, in time of backup process, the usage rules may execute signature as a method for not encryption but tamper detection. The keys to sign are assumed to be: a secret key of public key cryptography set for each domain; a secret key of public key cryptography set for each terminal device 300; or a secret key of public key cryptography set for the domain management server 100.

As described above, the process in which a user gives the backup direction, and the terminal device 300 backups the self-held data in the network storage 200 has been explained. Next, the process in which the terminal device 300 refers to the details of the data backuped in the network storage 200 will be explained referring to the drawings.

### <Process in which the details of the encrypted backup data is referred to>

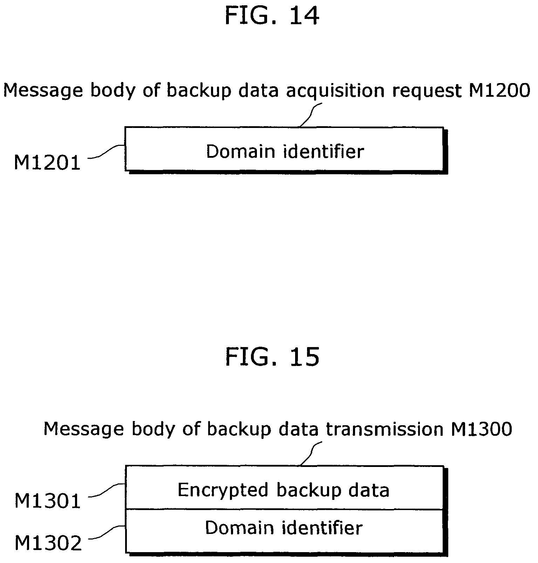

First, the data structure of the message body M702 of the communication message M700 related to the process of the details reference will be explained referring to FIG. 14 and FIG. 15.

FIG. 14 is a diagram showing the structure of the message body M702 of the communication message M700 (message of backup data acquisition request) transmitted so that the terminal device 300 can acquire the encrypted backup data stored into the network storage 200.

As shown in FIG. 14, the message body M702 is formed as the message body M1200 of backup data acquisition request, and the message body M1200 of backup data acquisition request includes a domain identifier M1201.

FIG. 15 is a diagram showing the structure of the message body M702 of the communication message M700 (backup data transmission message) which the network storage 200 replies to the terminal device 300, in response to the acquisition request from the terminal device 300.

As shown in FIG. 15, the message body M702 is formed as the message body M1300 of backup data transmission, and the message body M1300 of backup data transmission includes encrypted backup data M1301 and domain identifier M1302.

As described above, the data structure of the communication message M700 related to the details reference process has been explained.

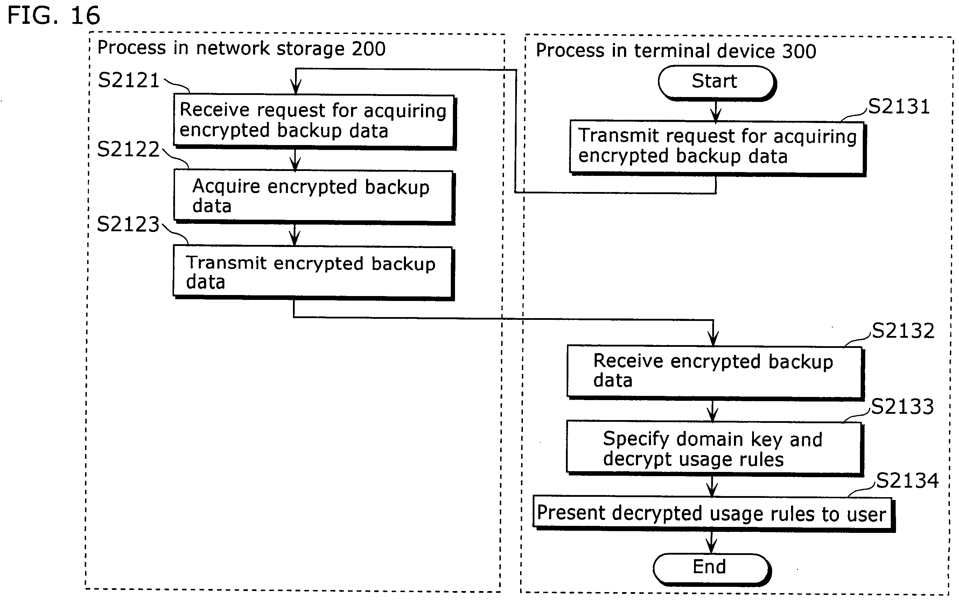

The process in which the terminal device 300 refers to the details of the encrypted backup data stored into the network storage 200 will be explained referring to FIG. 16.

FIG. 16 is a flow chart showing the reference process.

The terminal device 300, according to the user's direction for backup data details reference, to the application, starts the reference process of the encrypted backup data details stored into the network storage 200. In other words, the terminal application which received the details reference direction from the user gives details reference direction to the backup data reference unit 305. Here, the user inputs the corresponding domain identifier into the encrypted backup data to be referred to.

The backup data reference unit 305 generates the above mentioned message of backup data acquisition request, and transmits to the network storage 200 via the communication unit 301 (step S2131).

The domain identifier M1201 included in the message body M1200 of backup data acquisition request is the domain identifier associated with the encrypted backup data whose details are to be referred to.

The network storage 200 receives the message of backup data acquisition request via the communication unit 201 (step S2121). The data acquisition and storage unit 202 extracts the domain identifier M1201 from the message body M1200 of backup data acquisition request, and detects the domain identifier M1201 from the data management table D500 of the data storage unit 211. Moreover, the data acquisition and storage unit 202 specifies and acquires the stored data D502 which is the encrypted backup data of the domain associated with the domain identifier M1201 (step S2122). In the case where the encrypted backup data of the domain associated with the domain identifier M1201 does not exist, the data acquisition and storage unit 202 transmits, to the terminal device 300, the communication message M700 (reply message) including, in the message body M702, the fact that the encrypted backup data does not exist.

In the case where the encrypted backup data exists, the data acquisition and storage unit 202 (i) generates the communication message M700 (message of backup data transmission) by adding the message header M701 to the message body M702 which includes (i) the stored data D502 that is the encrypted backup data and (ii) the domain identifier M1201, and transmits to the terminal device 300 via the communication unit 201 (step S2123).

The backup data reference unit 305 receives the message of backup data transmission via the communication unit 301 (step S2132).

The backup data reference unit 305 (i) extracts the domain identifier M1302 from the message of backup data transmission, and (ii) specifies and acquires the domain key using the domain identifier M1302 as the key in the domain key storage unit 311. The network storage 200 may not include the domain identifier M1302 in the message body M1300 of backup data transmission. In such case as described above, the terminal device 300 (i) temporarily memorizes the domain identifier M1201 including the message of backup data acquisition request, and (ii) specifies and acquires the domain key associated with the memorized domain identifier M1201 from the domain key storage unit 311.

Also, in the case where the domain key is not stored into the domain key storage unit 311, the terminal device 300 acquires the domain key according to the flow of the above explained process of domain key acquisition.

The backup data reference unit 305 transmits the encrypted backup data M1301 and the domain key to the encryption and decryption unit 306. The encryption and decryption unit 306 executes decryption process of the received encrypted backup data M1301 (step S2133), and transmits the decrypted backup data to the backup data reference unit 305. The backup data reference unit 305 presents, to the user, the data details which the user desires to refer to, among the received backup data (step S2134). According to the present embodiment, the details which the user desires to confirm is the usage rules of the license. By inputting the information for specifying the data which the user desires to refer to, the terminal device 300 may change the data details to present the user, according to the information.

### <Variation of the reference process>

Here, in the case where additional data indicating, for example, the above mentioned restoration expiration date is added to the encrypted backup data stored into the network storage 200, the terminal device 300 displays and informs the content of the additional data to the user.

Also, in the case where additional data indicating the above mentioned reference specific data is added to the encrypted data stored into the network storage 200, the terminal device 300 displays and informs the details of the reference specific data to the user. In the case where the encrypted backup data is a license, and the reference specific data is usage rules, the terminal device 300 does not need a decryption process when referring to the usage rules, the process can be simplified. The reference specific data is used only for reference, and not used for a restoration process. Also, in the case where the encrypted backup data is signed, the terminal device 300 detects a tamper by signature verification. Only in the case where the data is not tampered, the terminal device 300 may display and inform the details of the encrypted backup data to the user.

As described above, the processes in which (i) the user gives a direction to refer to the details of the backup data, (ii) the terminal device 300 acquires the encrypted backup data from the network storage 200, and (iii) the terminal device 300 presents the details of the encrypted backup data to the user have been explained. Next, the process in which the terminal device 300 restores the encrypted backup data stored into the network storage 200 will be explained referring to the drawings.

### <Process in which the encrypted backup data is restored>

The data structure of the communication message related to the process of data restoration is the same as the data structure of the communication message related to the above mentioned details reference.

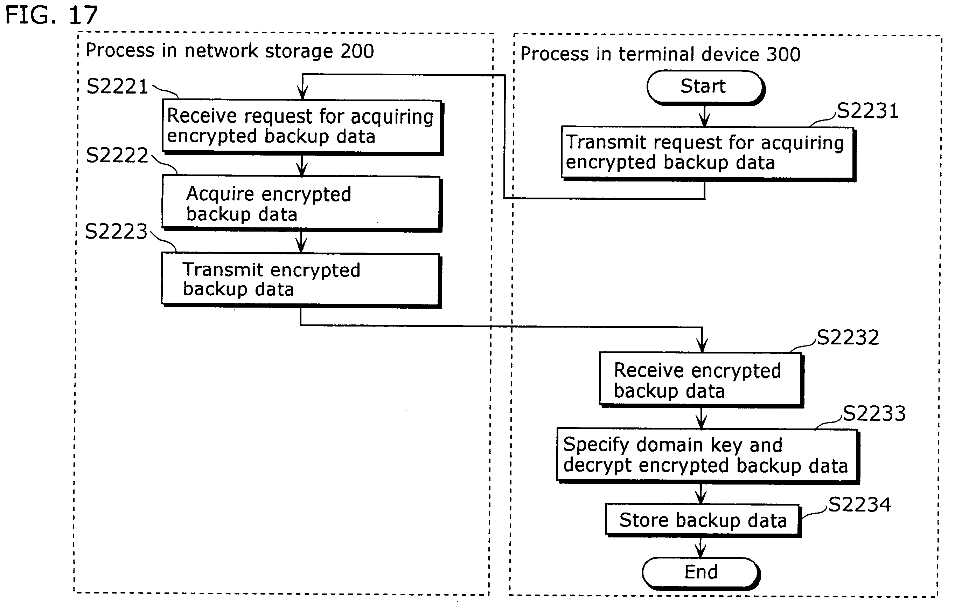

The processes leading to that the terminal device 300 restores the encrypted backup data stored into the network storage 200 will be explained referring to FIG. 17.

FIG. 17 is a flow chart showing the restoration process of the encrypted backup data.

The terminal device 300 starts the restoration process of the encrypted backup data stored into the network storage 200, according to the user's data restoration direction given to the terminal application. In other words, the terminal application which receives the data restoration direction from the user gives the data restoration unit 304 the data restoration direction. Here, the user inputs a domain identifier associated with the encrypted backup data to be restored.

Here, the processes leading to that the data restoration unit 304 requests the encrypted backup data to the network storage 200 and decrypts the encrypted backup data (step S2231 to step S2233 and step S2221 to step S2223) are the same as the above mentioned processes (step S2131 to step S2133 and step S2121 to step S2123 in FIG. 16) of the backup data reference unit 305 in time of referring to backup data, thereby the explanation will be omitted here.

The data restoration unit 304 associates the decrypted backup data with the domain identifier M1302, and stores the data in the data storage unit 312 (step S2234). Then, when storing the decrypted backup data into the data storage unit 312, the data restoration unit 304 deletes the original data which corresponds to the same domain identifier as the decrypted backup data. The original data may be deleted in advance before the restoration process is started. Also, in the case where data overlaps due to the restoration process, the data restoration unit 304 may delete only the overlapping original data. For example, in the case where as the original data associated with the same domain identifier and held by the terminal device 300, the license of the content identifier "CONTENT-ID-9001" and the license of the content identifier "CONTENT-ID-9002" exist, and as the encrypted backup data, the license of the content identifier "CONTENT-ID-9001" exists, when executing the restoration process on the encrypted backup data, the data restoration unit 304 deletes only the license of the content identifier "CONTENT-ID-9001" which is the original data, and does not delete the license of the content identifier "CONTENT-ID-9002".

### <First Variation of restoration process: additional data>

Here, when restoring the encrypted backup data as described above, the terminal device 300 may execute the following processes.

In other words, when the above mentioned additional data is added to the encrypted backup data, the terminal device 300 executes processes associated with the content indicated by the additional data.

For example, in the case where the additional data indicates the restoration expiration date, the terminal device 300 acquires, from the network storage 200, the encrypted backup data to which the additional data is added, and confirms the restoration expiration date indicated by the additional data. Then, when it is judged that the current date exceeds the restoration expiration date, the terminal device 300 does not restore the encrypted backup data. When it is judged that the current date does not exceed the restoration expiration date, the terminal device 300 restores the encrypted backup data.

In the case where the additional data indicates the backup processing time, the terminal device 300 (i) selects, from the encrypted backup data stored into the network storage 200, the encrypted backup data to which the additional data indicating the latest backup processing time is added, and (ii) acquires and restores the encrypted backup data. In other words, in the case where the terminal device 300 executes the backup process a plurality of times, the plurality of encrypted backup data generated by the above mentioned process is stored. Then, as the above mentioned additional data is added to the plurality of encrypted backup data, the terminal device 300 executes the restoration process on the encrypted backup data on which the backup process has been executed lately. Also, the terminal device 300 may set the restoration expiration date by adding a certain time to the backup processing time, and abort the restoration process on the encrypted backup data which exceeds the above mentioned restoration expiration date.

In the case where the additional data indicates the data version, the terminal device 300 (i) selects the encrypted backup data to which the additional data indicating the latest data version is added, and (ii) acquires and restores the encrypted backup data. The network storage 200 may select the encrypted backup data according to the predetermined control rules. For example, in the case where as the predetermined control rule, "select the latest encrypted backup data" is set in the network storage 200, the network storage 200 selects the latest encrypted backup data from the above mentioned data version and backup process. Then, the network storage 200 gives the selected encrypted backup data to the terminal device 300.

In the case where the additional data indicates the encryption algorithm identifier, after acquiring the encrypted backup data from the network storage 200, the terminal device 300 specifies the encryption algorithm based on the encryption algorithm identifier indicating the additional data added to the encrypted backup data. Then, the terminal device 300 executes the restoration process on the encrypted backup data according to the specified encryption algorithm. In the case where the terminal device 300 does not hold the encryption algorithm associated with the encryption algorithm identifier added to the encrypted backup data, the terminal device 300 may acquire the encryption algorithm by communicating with other terminal devices and servers.

In the case where the additional data indicates the terminal identifier, after acquiring encrypted backup data from the network storage 200, the terminal device 300 specifies the terminal device based on the terminal identifier indicated by the additional data which is added to the encrypted backup data. In the case where the specified terminal device is not the terminal device 300 itself, the terminal device 300 inquires the specified terminal device whether or not the acquired encrypted backup data may be restored. Here, when the restoration permission is acquired from another terminal device, the terminal device 300 executes the restoration process on the encrypted backup data. In the case where the restoration permission is not acquired, the restoration process on the encrypted backup data is aborted.

Here, the restoration permission judgment by the terminal device 300 will be explained.

The terminal device 300 manages the list in which the terminal identifier of the terminal device for which restoration is permitted is registered, in order to judge whether or not to permit restoration for other terminal devices as described above. In other words, when the other terminal devices inquire the terminal device 300 about restoration, the other terminal devices notify their own terminal identifiers. And, the terminal device 300 which received the notice detects the terminal identifier specified by the notice from the above mentioned list. If the specified terminal identifier exists in the list, restoration is permitted for the terminal device which has made an inquiry. If the terminal identifier does not exist in the list, restoration is not permitted for the terminal device which has made an inquiry. Also, even if the terminal identifier exists in the list, in the case where the restoration is permitted for the terminal device of the terminal identifier only the predetermined number of times, the terminal device 300 may not permit restoration for the terminal device.

In the case where the additional data indicates a server identifier, after acquiring the encrypted backup data from the network storage 200, the terminal device 300 specifies a server based on the server identifier indicated by the additional data which is added to the encrypted backup data. The terminal device 300 inquires the specified server, whether or not the acquired encrypted backup data may be restored. Here, in the case where the restoration is permitted by the server, the terminal device 300 executes the restoration process on the encrypted backup data. In the case where the restoration permission is not acquired, the restoration process on the encrypted backup data is aborted. Also, the terminal device 300 may inquire the server, in advance, whether or not the restoration may be permitted on the encrypted backup data.

Here, the restoration permission judgment by the server will be explained.

The server manages, for each terminal device 300 or user, the number of times (data restoration number) the restoration has been permitted. In other words, when inquiring the server whether or not restoration may be permitted, the terminal device 300 notifies the server its own terminal identifier. The server, based on the terminal identifier indicated by the notice, specifies the terminal device 300 which has made an inquiry or the user. In the case where the data restoration number for the terminal device 300 or the user is less than the predetermined number, the server permits the restoration for the terminal device 300. In the case where the data restoration number exceeds the predetermined number, the server does not permit the restoration for the terminal device 300. As described above, the terminal device 300 inquires the server indicating additional data whether or not the restoration is permitted. However, the inquiry may be made to the server uniquely specified by the service or the server uniquely specified by the terminal device 300.

### <Second Variation of restoration process: consistency>

The data managed per domain changes along with the time, due to the data acquisition or data consumption process of the terminal device 300 included in the domain. The terminal device 300, in time of backup and data restoration, may communicate with the other terminal devices 300 included in the domain, and check consistency of the data held as domain.

For example, after restoring the encrypted backup data, if the terminal device 300a judges that the original data associated with the restored backup data is held by the terminal device 300b, checks the consistency between the backup data and the data held by the terminal device 300b. As a result of the check, in the case where there is no consistency, and the backup data is newer than the original data, the terminal device 300a keeps the backup data, and cancels the data held by the terminal device 300b. Also, in the case where the data held by the terminal device 300b is newer than the backup data, the terminal device 300a keeps the data, and cancels the backup data.

In addition, as a result of checking the consistency as described above, in the case where the terminal device 300a judges that there is no consistency, the terminal device 300a nullifies the backup data. In other words, the terminal device 300a does not execute restoration process. For example, in the case where the backup data is usage rules indicating the reproduction number of three times, and the original data is the usage rules indicating the reproduction number of five times, the terminal device 300a nullifies the backup data. In other words, normally, the reproduction number as the usage rules monotonically decrease with the time. Thus, it is unnatural that the reproduction number of the original data is larger than the reproduction number of the backup data. And, in such case as described above, there are high possibilities that an unauthorized process has been executed, the terminal device 300a nullifies the backup data as described above. Also, in the case where the terminal device 300a judges that there is no consistency, the terminal device 300a judges that an unauthorized process has been executed as described above, and may execute processes such as deleting the original data and making the use of the original data impossible.

In order to check the consistency, the terminal device 300a first restores the encrypted backup data as described above. In the case where the consistency can be checked based on the additional data added to the encrypted backup data, the terminal device 300a checks the consistency without first restoring the encrypted backup data. In the case where there is no consistency, the restoration process may be aborted.

Moreover, in the case where the backup data and the original data are licenses, and the terminal device 300 accumulates a usage history, after restoring the encrypted backup data, the terminal device 300 subtracts, from the restored backup data, the used amount of the original data which is used after the time of backup. In other words, in the case where (i) the reproduction permitted number of the backup data is five times, and (ii) in time of the backup data restoration, the original data is already lost, but recorded to have been reproduced twice as the usage history, the terminal device 300 calculates the reproduction permitted number of the backup data as three (5-2=3) times.

As described above, the processes in which (i) the user gives the data restoration direction, and (ii) the terminal device 300 acquires the encrypted backup data from the network storage 200 and restores the encrypted backup data have been explained.

Here, the variation regarding the overall process of the present embodiment will be explained.

### <First Overall Variation: key>

In the above mentioned explanation, encryption and decryption of the backup data are executed using the domain key which is the key of symmetric key cryptography set for each domain. However, encryption and decryption may be executed using the key described as following.

First, the method for using (i) the domain public key which is the key of public key cryptography set for each domain and (ii) the domain secret key will be explained. The key pair of the domain public key and the domain secret key is generated by the domain management server 100. The terminal device 300 acquires the domain secret key using the same method as the domain key, and manages the domain secret key securely. The domain public key is disclosed by the domain management server 100. In such case as described above, in time of backup, the backup data is encrypted by the domain public key, and in time of data restoration, the encrypted backup data is decrypted by the domain secret key.

As described above, so as to enable the sharing of the data in the domain, the key used for the encryption process in time of backup is set for each domain. However, the key used for the encryption process in time of backup may be set for each terminal device 300. In such case as describe above, only the terminal device 300 which executed the encryption process may execute the restoration process of the encrypted backup data.

As the key set for each terminal device 300, the key pair including the keys of the symmetric key cryptography or the keys of the public key cryptography is conceivable. Also, the key acquisition method and the encryption and decryption methods for the backup data are the same as the case where the key is set for each domain.

Also, as the key for encrypting backup data, the key pair including the keys of the symmetric key cryptography or the keys of the public key cryptography in the domain management server is conceivable. For example, in the case where the terminal device 300 holds the public key and domain key of the domain management server 100, and the terminal device 300 may freely restore the encrypted backup data without the control executed by the domain management server 100, the terminal device 300 encrypts the backup data using the domain key. Also, in the case where the domain management server 100 controls the restoration permission of the encrypted backup data, the terminal device 300 may encrypt the backup data using the public key of the domain management server. In the case where the backup data is encrypted using the public key of the domain management server 100, the terminal device 300, in time of data restoration, needs to request the decryption process of the encrypted backup data to the domain management server 100. In other words, the domain management server 100 can control the restoration permission of the encrypted backup data. Also, which of the public key and domain key is used for backup data encryption may be determined by the domain management server 100 or the terminal device 300.

### <Second Overall Variation: processing associated with data type>

When the terminal device 300 according to the present variation executes each process such as (i) a backup process on the data acquired from the data distribution server, (ii) a restoration process on the encrypted backup data, and (iii) a reference process on the encrypted backup data, the terminal device 300 executes the process associated with the data type set for the data and encrypted backup data. Here, the data type is set for each data by the data distribution server. The terminal device 300 (i) acquires, from the data distribution server, the data whose data type is set, (ii) duplicates the data for which the data type is set, and (iii) generates backup data.

For example, the terminal device 300, in time of the data backup, uses the encryption key, encryption method, or a signature method associated with the data type of the data. In other words, the terminal device 300 switches the encryption key and the like, depending on the data type. The terminal device 300 may (i) specify, based on the data type, the level of security and privacy protection calculated in the data protection system S, and (ii) combine and use the plurality of encryption keys, the encryption method and the signature method associated with the specified level.

Also, the terminal device 300, in time of the data backup, based on the data type set for the data, (i) specifies the type (additional data type) such as the data version and backup processing time of the above mentioned additional data and (ii) adds the additional data of the specified additional data type to the encrypted backup data.

Moreover, the terminal device 300, in time of restoring the encrypted backup data, based on the data type set for the encrypted backup data, judges whether or not the backup data may be restored. When the terminal device 300 judges that the restoration can be executed, the terminal device 300 executes a restoration process. And, when the terminal device 300 judges that the restoration cannot be executed, the terminal device 300 aborts the restoration process.

Furthermore, when the terminal device 300 executes a reference process of backup data, from among the content of the additional data added to the encrypted backup data, selects the content associated with the data type set for the encrypted backup data. And, the terminal device 300 acquires and displays the selected content (for example, usage rules).

### <Third Overall Variation: deleting backup data>

The network storage 200 according to the present variation, so as to store the encrypted backup data from the terminal device 300 into the limited memory capacity, each time the encrypted backup data is acquired from the terminal device 300, deletes, for example, the oldest encrypted backup data, from among the encrypted backup data which is already stored.

Also, the network storage 200, based on the request from the terminal device 300, after transmitting the stored encrypted backup data to the terminal device 300, deletes the encrypted backup data.

In addition, in the case where the above mentioned additional data is added to the stored encrypted backup data, the network storage 200 deletes the encrypted backup data according to the content of the additional data. In other words, when the additional data indicates the restoration expiration date, the network storage 200 judges whether or not the current date exceeds the restoration expiration date of the additional data. And, if the current date exceeds the restoration expiration date of the additional data, the network storage 200 deletes the encrypted backup data associated with the additional data.

Also, the network storage 200 periodically deletes the stored encrypted backup data, for example, sequentially from the oldest data.

### <Fourth Overall Variation: control information>

The terminal device 300 according to the present variation, based on the control information distributed from the domain management server 100 or the data distribution server, executes control such as a backup process, a restoration process and a data reference process.

For example, when the control information indicating the type of the encryption key, the encryption method and the signature method on the backup process is distributed to the terminal device 300, the terminal device 300 executes backup according to the type. Also, when the control information indicating the type of the additional data (additional data type) such as a data version and a backup processing time is distributed to the terminal device 300, the terminal device 300 adds, to the encrypted backup data, the additional data associated with the additional data type. Moreover, when the control information, indicating the longest type and the shortest type of the restoration expiration date on the backup process, is distributed to the terminal device 300, the terminal device 300 adds the additional data indicating the restoration expiration date of the type (longest or shortest) indicated by the control information among the restoration expiration dates respectively given to each license, on the encrypted backup data including a plurality of licenses.

In addition, when the above mentioned control information indicating the additional data type on the restoration process is distributed to the terminal device 300, the terminal device 300 specifies the additional data type indicated by the control information, based on the data version, backup processing time and restoration expiration date included in the additional data added to the encrypted backup data. For example, if the specified additional data type is the restoration expiration date, the terminal device 300 judges whether or not the current date exceeds the restoration expiration date. Then, if the current date exceeds the restoration expiration date, the terminal device 300 judges that the encrypted backup data cannot be restored.

Moreover, when the control information indicating the type (reference data type) such as usage rules and restoration expiration date on the data reference process is distributed to the terminal device 300, the terminal device 300 displays the details such as the usage rules and restoration expiration date associated with the reference data type.

The domain management server 100 or data distribution server has a control information list for generating such control information as described above.

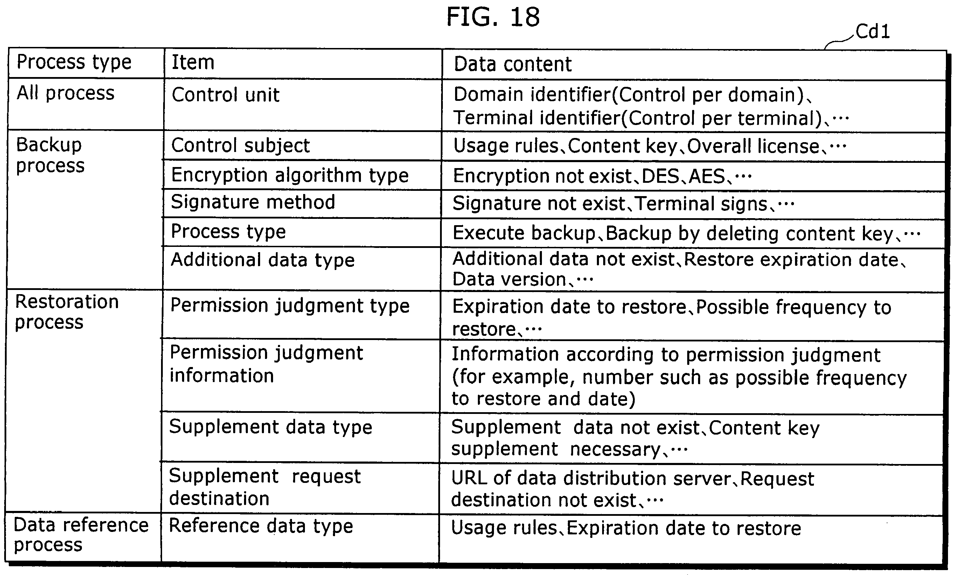

FIG. 18 is a details display diagram showing the details of the control information list.

In the above mentioned control information list Cd1, (i) processing type such as a backup process and a restoration process, (ii) item which needs to be included in the control information such as a control unit and a control subject on each processing type, and (iii) data details for each item are recorded.

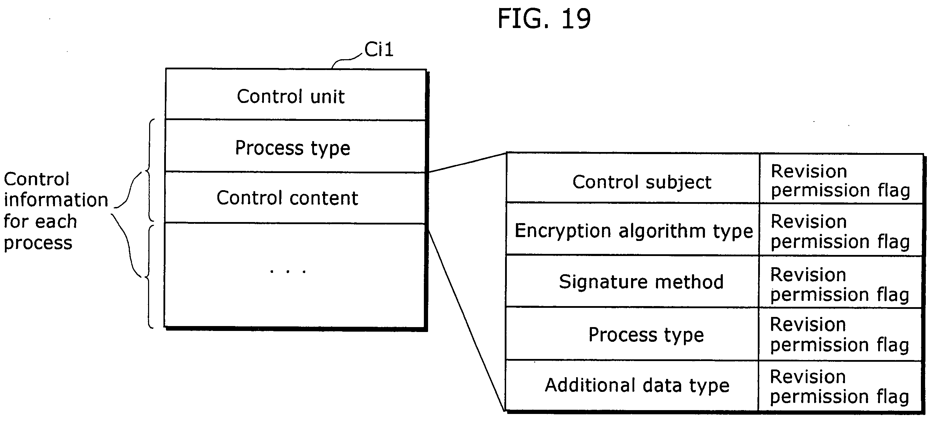

FIG. 19 is a data structure diagram showing the data structure of the control information.

The control information Ci1 includes process specific control information consisting of a control unit, a processing type and control details.

The domain management server 100 or the data distribution server, for example, when executing control on the backup process for each terminal device 300, (i) stores the terminal identifier of the predetermined terminal device 300 as the control unit, (ii) stores a backup process as the processing type, and (iii) stores a control subject, an encryption algorithm type, a signature method, a processing type and an additional data type as the control details. For example, the domain management server 100 or the data distribution server (i) stores "usage rules" as a control subject, (ii) stores "Data Encryption Standard (DES)" as an encryption algorithm type, (iii) stores "no signature" as a signature method, (iv) stores "backup by deleting content key" as a processing type, and (v) stores "restoration expiration date" as an additional type. The terminal device 300 which has acquired the above mentioned control information Ci1, when executing a backup process, (i) encrypts only the usage rules included in the license using "DES", (ii) generates encrypted backup data, and (iii) adds additional data indicating the restoration expiration date to the encrypted backup data. Also, in the control information Ci1, a revision permission flag is stored for each item such as the control subject and encryption algorithm type. The revision permission flag indicates whether or not the data can be revised, based on the user's operation of the terminal device 300.

Also, the domain management server 100 or the data distribution server, for example, when executing control on the restoration process for each terminal device 300, (i) stores the terminal identifier of the terminal device as the control unit, (ii) stores "restoration permission number" as a permission judgment type, (iii) stores information such as "three times" associated with the restoration permission number, as permission judgment information, and (iii) stores "no supplement data" as the supplement data type, and (iv) stores "no request destination" as the supplement request destination. The terminal device 300 which has acquired the above mentioned control information Ci1, when restoring the encrypted backup data, specifies the restoration permission number of the encrypted backup data. In the case where the specified number is smaller than the above mentioned "three times", the terminal device 300 executes restoration. In the case where the specified number is "three times" or larger, the terminal device 300 finishes the process without executing restoration.

Here, the user may input the above mentioned control information Ci1 into the terminal device 300. For example, if the control information Ci1 indicates the usage rules as the reference data type, the terminal device 300 displays the usage rules of the encrypted backup data in time of the data reference processing.

As described above, the present invention has been explained using the present embodiment and variations, the present invention is not limited to the above mentioned examples.

For example, here, the encrypted backup data is transmitted and stored into the network storage 200. However, the encrypted backup data may be stored into the external storage medium directly connected to the terminal device 300.

Also, in the communication between the network storage 200 and the terminal device 300, Secure Authenticated Channel (SAC) may be established.

Moreover, in time of restoration process, based on the content of the license which is encrypted backup data, the network storage 200 limits the restoration of the license, and updates the license.

For example, in time of restoration process, in the case where the expiration date of the license usage rules has expired, the network storage 200 (i) does not transmit the license whose expiration date has expired to the terminal device 300, or (ii) changes the details of the usage rules, and transmits the content to the terminal device 300. Also, in the case where a plurality of licenses exist as the encrypted backup data, and the expiration date of a part of the licenses has expired, the network storage 200 may (i) execute the above mentioned process only on the part of the licenses whose expiration date has expired, or execute the above mentioned process on all of the licenses.

### (Second Embodiment)

Hereinafter, the second embodiment of the present invention will be specifically explained using the drawings.

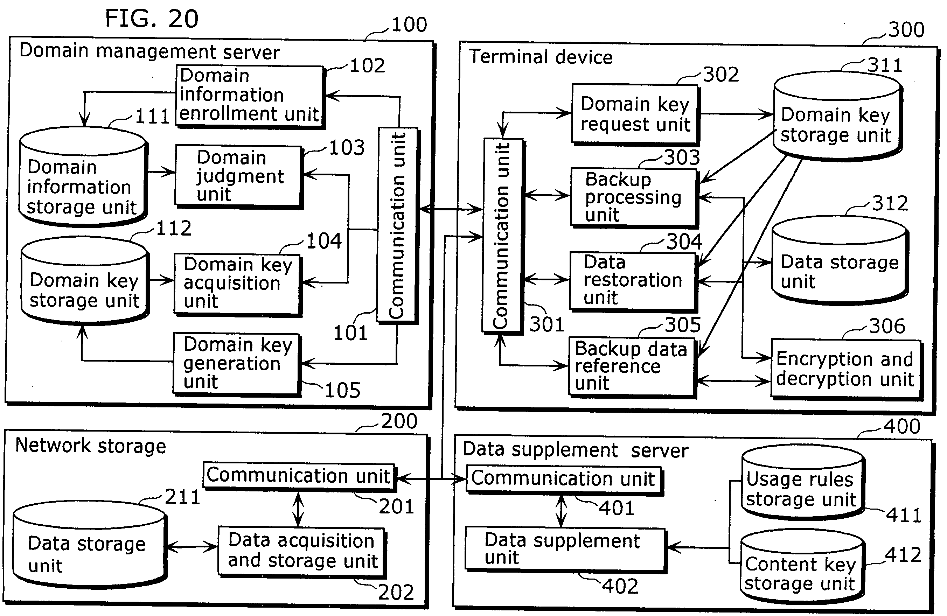

FIG. 20 is a structure diagram showing the structure of the data protection system according to the second embodiment of the present invention.

The data protection system according to the present embodiment comprises the components of the data protection system S as shown in FIG. 1, and a data supplement server 400. The specific structures of the domain management server 100, the network storage 200, and the terminal device 300 are the same as the first embodiment, thus the explanation will be omitted. Here, the specific structure of the data supplement server 400 which differs from the first embodiment will be explained. All of the terminal devices 300a, 300b and 300c, as well as the first embodiment, have the identical structures, one of the terminal devices 300a, 300b and 300c is described as the terminal device 300 in FIG. 20.

The terminal device 300 according to the present embodiment, in time of data backup, (i) deletes a part of the backup data according to the data details, and (ii) encrypts the rest of the backup data. In other words, even if the terminal device 300 simply decrypts the encrypted backup data, the encrypted backup data cannot be restored to the original data.

The data supplement server 400 according to the present embodiment (i) receives the backup data which is the decrypted and encrypted backup data from the terminal device 300, and (ii) restores the backup data to the original data by supplementing the backup data with the lacking information. Then, the data supplement server 400 transmits the restored data to the terminal device 300. Specifically, the data supplement server 400 (i) manages (a) a domain identifier, (b) a content identifier and usage rules, and (c) a content identifier and a content key, based on the data restoration request from the terminal device 300, (ii) executes a data restoration process, and (iii) distributes the restored data, via the transmission path N, to the terminal device 300a, 300b and 300c. According to the present embodiment, data is restored by the decryption process and supplement process.

Generally, the data supplement server 400 is considered to be the same as the data distribution server which distributes data to the terminal device 300.

The data supplement server 400 includes: a usage rules storage unit 411 for storing usage rules; a content key storage unit 412 for storing the content key; a communication unit 401 for communicating with the terminal device 300; a usage rules storage unit 411; and a data supplement unit 402 for acquiring data from the content key storage unit 412, supplementing data and generating restored data.

As described above, the specific structure of the data supplement server 400 has been explained.

Here, the data structure of the data newly handled in the second embodiment will be explained. The data held by each storage unit of the data supplement server 400 will be explained in reference to the drawings.

The usage rules storage unit 411 is a data base including a usage rules management table for managing usage rules. And, the usage rules management table indicates association between the information for identifying the usage rules and the usage rules.

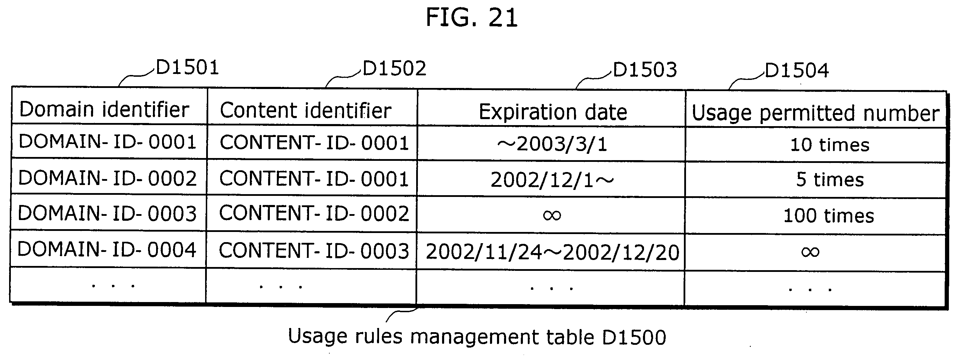

FIG. 21 is a diagram showing the above mentioned usage rules management table.

The usage rules storage unit 411 includes a usage rules management table D1500 as shown in FIG. 21, and manages a domain identifier D1501 as information for identifying usage rules, a content identifier D1502, an expiration date D1503 of the license as usage rules, and a content usage permitted number D1504.

For example, in FIG. 21, in the usage rules management table D1500, the usage rules in which the domain identifier D1501 is "DOMAIN-ID-0001", and the content identifier D1502 is "CONTENT-ID-0001" indicate that the expiration date D1503 is "valid until March 1, 2003", and the usage permitted number D1504 is "ten times".

The content key storage unit 412 is a database including a content key management table for managing the content key. And, the content key management table indicates association between the content identifier and the content key.

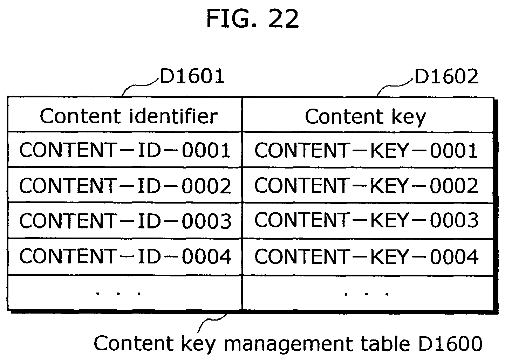

FIG. 22 is a diagram showing the details of the above mentioned content key management table.

The content key storage unit 412 includes a content key management table D1600 as shown in FIG. 22, and manages the content identifier D1601 and the content key D1602.

For example, in FIG. 22, the content key management table D1600 indicates that the content key D1602 of the content associated with the content identifier D1601, "CONTENT-ID-0001", is "CONTENT-KEY-0001".

As described above, the data structure of the data newly handled in the second embodiment has been explained.

According to the first embodiment, the method for executing backup by encrypting both of the usage rules and content key included in the license which is the data to be backuped has been explained. According to the second embodiment, the method for backuping only one of the usage rules and content key included in the license, and in time of restoration process, restoring data by using the data supplement server 400 will be explained.

Here, the method for deleting the content key in time of backup, and backuping only the usage rules will be explained. This method is effective from the viewpoint of security because backuping the content key is not allowed, and in time of data reference, the communication with the data supplement server 400 is not necessary.

In the data protection system structured as described above, the process in which the terminal device 300 executes data backup, and the process in which the terminal device 300 executes restoration of the encrypted backup data will be explained referring to the drawings.

The process in which the terminal device 300 acquires a domain key from the domain management server 100 is the same as the process explained in the first embodiment, thus the explanation will be omitted here.

### <Data backup process>

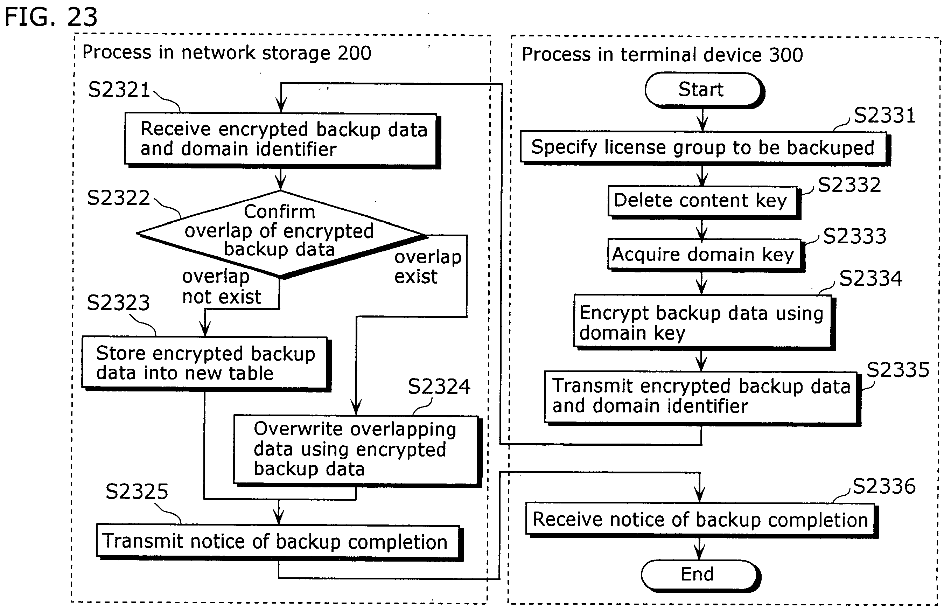

First, the process in which the terminal device 300 executes data backup will be explained referring to FIG. 23.

The data structure of the communication message M700 related to the backup process is the same as the communication message M700 related to the backup process of the first embodiment, thus, the explanation will be omitted.

FIG. 23 is a flow chart showing a backup process.

The terminal device 300 starts the backup process of the data held by the terminal device 300, according to the backup direction given to the user's terminal application. In other words, the terminal application which received the backup direction from the user gives the backup direction to the backup processing unit 303. Here, if necessary, the user inputs the data limiting information to be backuped.

The backup processing unit 303, based on the data limiting information to be backuped, (i) specifies the data to be backuped, that is, a license group, from among the data stored into the data storage unit 312, (ii) duplicates the license group, and (iii) generates backup data (step S2331).

The backup processing unit 303 securely deletes the content key of each license from the backup data (step S2332). Here, securely deleting means to erase the data of the content key without having the content key intercepted by the third person. Also, the backup processing unit 303 associates the backup data whose content key has been deleted with the content identifier associated with each license included therein.

The backup processing unit 303, using the backup data generated as described above, executes processes of the step S2333 to the step S2336. And, the network storage 200 executes the processes from the step S2321 to the step S2325.

(i) The processes (from the step S2333 to the step S2336) from the domain key acquisition leading to backuping the data to be backuped by the backup processing unit 303 and (ii) the processes (from the step S2321 to the step S2325) executed by the network storage 200 are the same as the processes (from the step S2032 to the step S2035 and from the step S2021 to the step S2025 in FIG. 20), thus the explanation will be omitted.

### <Variation of backup process: additional data>

Here, when the terminal device 300 duplicates and encrypts the data and backups the data in the network storage 200 as described above, as well as the first embodiment, additional data may be added to the encrypted backup data. Also, the additional data according to the present variation may be a restoration expiration date, a supplement server identifier for identifying the data supplement server 400, and the like.

As described above, the processes in which (i) the user gives a backup direction, (ii) the terminal device 300 deletes the content key from the backup data of the license group, and stores the encrypted backup data into the network storage 200 have been explained. Next, the processes in which the terminal device 300 restores data using the encrypted backup data stored into the network storage 200 will be explained referring to the drawings.

### <Processes in which the encrypted backup data is restored>

First, the data structure of the communication message M700 related to the data restoration process will be explained referring to the drawings.

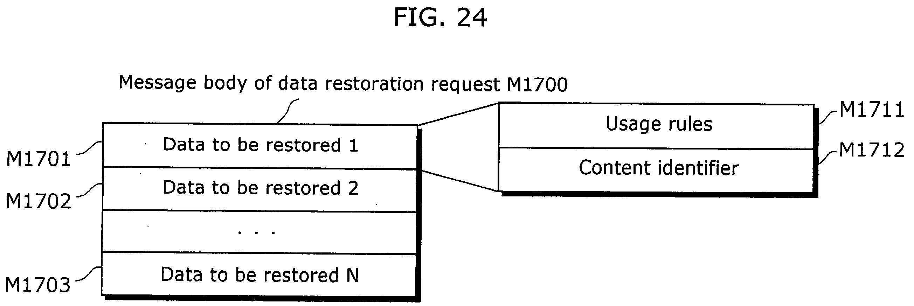

FIG. 24 is a diagram showing the data structure of the message body M702 of the communication message M700 (data restoration request message) transmitted when the above mentioned terminal device 300 requests data supplement to the data supplement server 400.

As shown in FIG. 24, the message body M702 is structured as the message body M1700 of data restoration request. And, the message body M1700 of data restoration request includes one or more data to be restored, M1701 to M1703. Each of the data to be restored, M1701 to M1703 has usage rules M1711 and a content identifier M 1712.

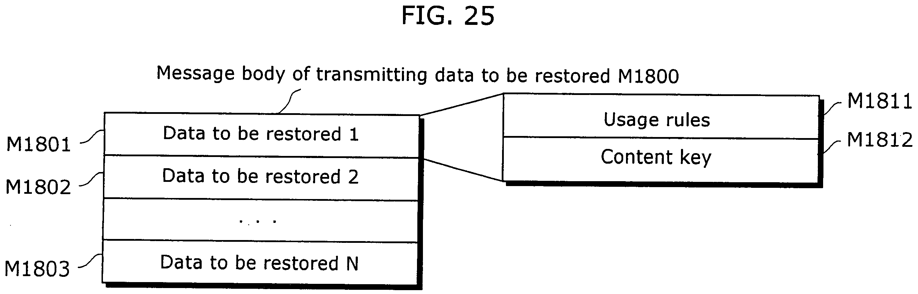

FIG. 25 is a diagram showing the data structure of the message body M702 of the communication message M700 (message of transmitting data to be restored) transmitted from the data supplement server 400 to the terminal device 300.

As shown in FIG. 25, the message body M702 is structured as the message body M1800 of transmitting data to be restored. And, the message body M1800 of transmitting data to be restored includes one or more data to be restored M1801 to M1803. Each of the data to be restored M1801 to M1803 has usage rules M1811 and a content identifier M1812.

The data structure of the message body M702 of the communication message M700 related to the process in which the terminal device 300 acquires the encrypted backup data from the network storage 200 is the same as the data structure as shown in FIG. 14 and FIG. 15, thus, the explanation will be omitted.

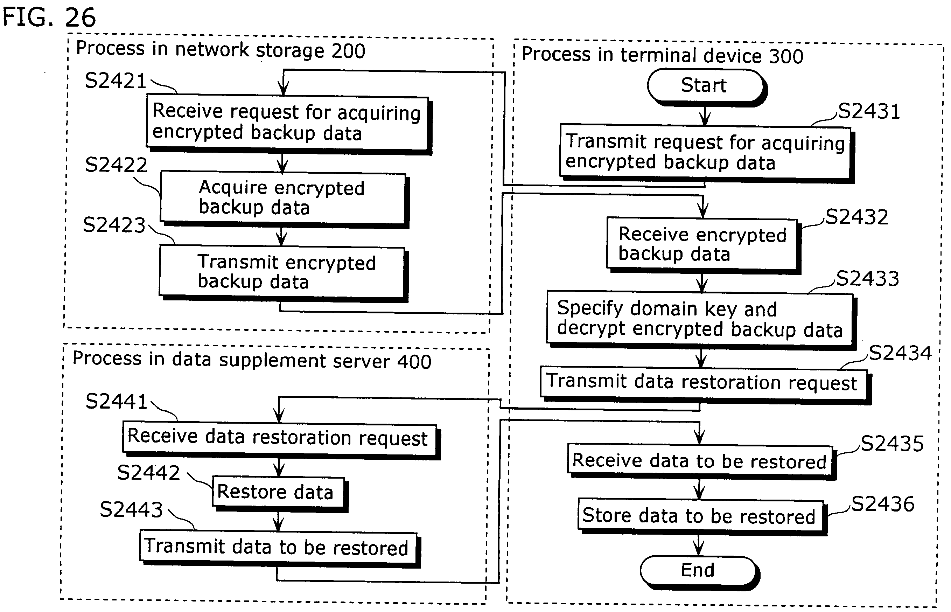

As described above, the data structure of the communication message M700 related to the data restoration process has been explained. Next, the processes of each unit until the terminal device 300 restores data using the encrypted backup data stored into the network storage 200 will be explained referring to FIG. 26.

FIG. 26 is a flow chart showing a data restoration process.

The processes (from the step S2431 to the step S2433, and from the step S2421 to the step S2423) in which according to the user's data restoration direction, the terminal device 300 requests the encrypted backup data to the network storage 200, and decrypts the data are the same as the processes as shown in FIG. 22 of the first embodiment (from the step S2231 to the step S2233, and from the step S2221 to the step S2223), thus the explanation will be omitted.

The data restoration unit 304 generates the above mentioned message of data restoration request, and transmits the message to the data supplement server 400 via the communication unit 301 (step S2434).

Here, the usage rules M1711 included in the message body M1700 of data restoration request are the usage rules for the decrypted backup data. The content identifier M1712 is a content identifier associated with the usage rules in the backup data.

The data supplement server 400 receives the message of data restoration request via the communication unit 401 (step S2441).

The data supplement unit 402 (i) extracts the content identifier M1712 of the data M1701 to be restored from the message of data restoration request, then (ii) specifies and acquires the content key D1602 by using the content identifier M1712 as a key in the content key storage unit 412. And, the data supplement unit 402 generates the data M1801 to be restored using the usage rules M1711 and the content key D1602. In other words, the data supplement unit 402 restores data by supplementing the content key. The above mentioned data restoration process is repeated for each data M1701 to be restored, and the data is restored (step S2442).

The data supplement unit 402 generates the above mentioned message of transmitting data to be restored, and transmits the message to the terminal device 300 via the communication unit 401 (step S2443).

The data M1801 to be restored included in the message body M1800 of transmitting data to be restored is the data restored in the step S2442.

The data restoration unit 304 receives the message of transmitting data to be restored via the communication unit 301 (step S2435).

The data restoration unit 304 (i) extracts data to be restored from the message of transmitting data to be restored, (ii) associates the data to be restored with the domain identifier M1302 included in the message body M1300 of backup data transmission and (iii) stores the associated data to be restored into the data storage unit 312 (step S2436).

Here, the terminal device 300 transmits the usage rules and the content identifier to the data supplement server 400, and the data supplement server 400 restores the data. However, the terminal device 300 may (i) transmit only the content identifier to the data supplement server 400 and (ii) acquire the corresponding content key, and the data restoration unit 304 of the terminal device 300 may restore the data.

### <Variation of restoration process: additional data>

Here, as well as the first embodiment, in the case where additional data is added to encrypted backup data, the terminal device 300 according to the present variation executes a process associated with the content indicated by the additional data. For example, in the case where additional data indicates a supplement server identifier, the terminal device 300 requests data restoration to the data supplement server 400 indicated by the supplement server identifier.

### <Process in the case where the details of the encrypted backup data is referred to>

As well as the terminal device 300 according to the first embodiment, the terminal device 300 according to the present embodiment displays the details of the encrypted backup data. In the case where additional data is added to the encrypted backup data, the terminal device 300 displays the content of the additional data. For example, in the case where the additional data indicates a supplement server identifier, the terminal device 300 displays the supplement server identifier or the name of the data supplement server 400 associated with the supplement server identifier.

Here, a variation regarding the overall process of the present embodiment will be explained.

### <First Overall Variation: control information>

As well as the variation of the first embodiment, the terminal device 300 according to the present variation executes control such as a backup process, a restoration process and a data reference process based on the control information distributed from a domain management server 100 or a data distribution server.

For example, in the case where the control information indicating the supplement permission for the decrypted backup data is distributed to the terminal device 300, the terminal device 300 judges whether or not the data supplement can be requested to the data supplement server 400 based on the control information. As a result, when the terminal device 300 judges that the data supplement cannot be requested to the data supplement server 400, the terminal device 300 does not execute the request. When the terminal device 300 judges that the data supplement can be requested to the data supplement server 400, the terminal device 300 requests the data supplement to the data supplement server 400.

### <Second Overall Variation: process associated with data type>

As well as the variation of the first embodiment, when the terminal device 300 according to the present variation executes each process such as a backup process on the data acquired from the data distribution server, a restoration process of the encrypted backup data, and a reference process on the backup data, the process associated with data type set by the data and backup data is executed.

For example, when the terminal device 300 backups data, the terminal device 300 uses an encryption key, an encryption method and a signature method associated with the data type of the data. The terminal device 300 may specify, based on the data type, the required level of security and privacy protection in the data protection system. And, according to the specified level, the terminal device 300 may combine and use a plurality of encryption keys, encryption methods, and signature methods.

Also, when the terminal device 300 restores the encrypted backup data, the terminal device 300 judges whether or not the data can be restored, based on the data type set by the encrypted backup data. When the terminal device 300 judges that the data can be restored, the terminal device 300 executes a restoration process. And, when the terminal device 300 judges that the data cannot be restored, the terminal device 300 aborts the restoration process.

In addition, before the terminal device 300 requests the data supplement to the data supplement server 400, according to the data type of the backup data, the terminal device 300 judges whether or not the request can be made. As a result of the judgment, when the terminal device 300 judges that the request cannot be made, the terminal device 300 does not execute the request. When the terminal device 300 judges that the data supplement can be requested to the data supplement server 400, the terminal device 300 requests the data supplement to the data supplement server 400.

The data supplement server 400 may limit the data restoration or update the license, based on the content of the license which is the encrypted backup data in time of the data restoration. For example, the data supplement server 400, in time of data supplement, in the case where the expiration date of the usage rules for the license is expired, the data supplement server 400 does not supplement the data of the license whose expiration date is expired, and transmits the unsupplemented data to the terminal device 300. Also, the data supplement server 400 may not transmit the restored backup data to the terminal device 300, or may change the details of the usage rules, and transmit the data to the terminal device 300.

In addition, in the case where a plurality of licenses exist as backup data, and the expiration dates for some of the licenses are expired, the data supplement server 400 may execute the above mentioned processes only on the licenses whose expiration dates are expired, or on all of the licenses.

As described above, the present invention has been explained using the present embodiment and variations. However, the present invention is not limited to such embodiment and variations as described above.

For example, here, the encrypted backup data is transmitted and stored into the network storage 200. However, the encrypted backup data may be stored into an external storage medium directly connected to the terminal device 300.

For example, according to the present embodiment, the content key is deleted. However, the usage rules may be deleted. In such case as described above, the encrypted content key is stored as the encrypted backup data into the network storage 200, and in time of data restoration, the data supplement server 400 supplements the content key with the usage rules. Also, in order to restore data, the data supplement server 400 must hold a usage rules management table D1500 which associates information for specifying the usage rules with a content key. For example, the usage rules management table D1500 holds information for specifying usage rules in stead of the pairs of the domain identifier D1501 and content identifier D1502 of the usage rules management table D1500 as shown in FIG. 21.

### Industrial Applicability

The terminal device according to the present invention prevents the encrypted backup data from being illegally restored. And, the restoration can be executed by curbing the dependence on the server device. Thus, the terminal device according to the present invention can be used as, for example, a terminal device in the data distribution system and the like which deal with content and the license.

## Claims

1. A terminal device (300) which belongs to a first domain and a second domain, each domain being a logical group of terminal devices in a data distribution service, the first domain including a plurality of terminals which pass data only between each other and the second domain including a plurality of terminals which pass data only between each other, a domain not permitting transfer of data among terminal devices belonging to different domains, the terminal device comprising:
a domain key holding unit (311) operable to hold a first domain key common to the first domain, the first domain key being a content encryption key required in order to utilize digital content and being associated with an identifier for identifying the first domain and being common to the first domain, and to hold a second domain key common to the second domain, the second domain key being a content encryption key required in order to utilize digital content and being associated with an identifier for identifying the second domain and being common to the second domain;
a data duplication unit (303) operable to duplicate data shared by the first domain or the second domain so as to generate duplicate data associated with the first domain or the second domain;
an encryption unit (306) operable to encrypt the duplicate data so as to generate encrypted duplicate data, using (i) the first domain key in the case where the duplicate data is associated with the first domain, or (ii) the second domain key in the case where the duplicate data is associated with the second domain,
a data storage unit (312) operable to associate the duplicate data with the first domain in the case where the data shared by the first domain is duplicated or associate the duplicate data with the second domain in the case where the data shared by the second domain is duplicated, and to store the encrypted duplicate data into a storage medium,
a decryption unit (306) operable to decrypt the encrypted duplicate data stored in the storage medium, using the first domain key or the second domain key held by said key holding unit, so as to restore the encrypted duplicate data to the duplicate data,
wherein the data shared by each of the first domain and the second domain indicates (i) a content key which is necessary for using a content that is a digital copyrighted work, and (ii) usage rules, and
said duplication unit (303) deletes a part of the duplicate data according to the details of the duplicate data, the deleted part indicating the content key in the duplicate data of the data, and
said encryption unit (306) encrypts the rest of the deleted duplicate data so as to generate the encrypted duplicate data,
said terminal device further comprising
a supplement unit (400) operable to (i) communicate with the terminal device belonging to said first and second domains, (ii) store the content key, and (iii) supplement the part deleted by said duplication unit (303) to the data decrypted by said decryption unit (306).

2. The terminal device according to Claim 1,
wherein in the case where the duplicate data is associated with the first domain, said data storage unit stores, into the storage medium, an identifier for identifying the first domain, the identifier being assigned to the encrypted duplicate data, and in the case where the duplicate data is associated with the second domain, said data storage unit stores, into the storage medium, an identifier for identifying the second domain, the identifier being assigned to the encrypted duplicate data.

3. The terminal device according to Claim 2,
wherein said duplication unit deletes a part of the duplicate data according to the details of the generated duplicate data, and digitally signs the rest of the duplicate data, and
said data storage unit stores the digitally signed duplicate data into the storage medium.

4. The terminal device according to Claim 3,
wherein the data shared by each of the first domain and the second domain indicates (i) a content key which is necessary for using a content that is a digital copyrighted work, and (ii) usage rules, and
said duplication unit deletes a part indicating the content key in the duplicate data of the data.

5. The terminal device according to Claim 1,
wherein said encryption unit assigns, to the encrypted duplicate data, an identifier for identifying the first or second domain key used for encrypting the duplicate data,
said storage unit stores, into the storage medium, the encrypted duplicate data assigned with the identifier, and
when decrypting the encrypted duplicate data stored into the storage medium, said decryption unit (i) specifies the first domain key or the second domain key used for encrypting the duplicate data, based on the identifier assigned to the encrypted duplicate data, and (ii) decrypts the encrypted duplicate data using the specified first domain key or second domain key.

6. The terminal device according to Claim 1,
wherein in the case where said decryption unit receives a permission for decrypting the encrypted duplicate data from a server device connected via a communication line, said decryption unit decrypts the encrypted duplicate data.

7. The terminal device according to Claim 6,
wherein when decrypting the encrypted duplicate data, said decryption unit (i) inquires the server device whether the encrypted duplicate data can be decrypted or not, and (ii) decrypts the encrypted duplicate data in the case where said decryption unit receives a reply indicating that the encrypted duplicate data can be decrypted.

8. The terminal device according to Claim 1, further comprising
a reference unit operable to cause a user to refer to the details of the duplicate data restored by said decryption unit.

9. The terminal device according to Claim 1,
wherein said encryption unit assigns, to the encrypted duplicate data, additional information indicating details regarding handling of the encrypted duplicate data, and
said storage unit stores, into the storage medium, the encrypted duplicate data assigned with the additional information.

10. The terminal device according to Claim 1,
wherein said encryption unit generates the encrypted duplicate data using a digital signature for duplicate data whose disclosure is permitted and modification is prohibited.

11. The terminal device according to Claim 1, further comprising
a communication unit operable to communicate, via a communication line, with a key server device which distributes the first domain key and the second domain key,
wherein said key holding unit acquires the first domain key and the second domain key from the key server device via the communication unit so as to hold the acquired keys.

12. The terminal device according to Claim 11,
wherein said key holding unit (i) requests the first domain key and the second domain key to the key server device via said communication unit, and (ii) acquires the first domain key and the second domain key so as to hold the acquired keys.

13. The terminal device according to Claim 12,
wherein at least one of the first domain key and the second domain key is an encryption key of a symmetric key cryptography.

14. A data protection system which (i) comprises a first domain and a second domain, each domain being a group of terminal devices, and a server device that communicates with each of said terminal devices, and (ii) protects data shared by each of the first and second domains,
wherein said server device distributes a first domain key common to each of said terminal devices belonging to said first domain, and distributes a second domain key common to each of said terminal devices belonging to said second domain,
each of the terminal devices being a terminal device according to claim 1.

15. The data protection system according to Claim 14,
wherein the data shared by each of said first domain and said second domain indicates (i) a content key which is necessary for using a content that is a digital copyrighted work, and (ii) usage rules, and
said duplication unit deletes a part indicating the content key in the duplicate data of the data.

16. The data protection system according to Claim 14,
wherein in the case where said decryption unit receives, from said server device, a permission for decrypting the encrypted duplicate data, said decryption unit decrypts the encrypted duplicate data.

17. The data protection system according to Claim 16,
wherein when decrypting the encrypted duplicate data, said decryption unit (i) inquires said server device whether the encrypted duplicate data can be decrypted or not, and (ii) decrypts the encrypted duplicate data in the case where said decryption unit receives a reply indicating that the encrypted duplicate data can be decrypted.

18. A data protection method used by a terminal device according to claim 1 for protecting data shared by first and second domains, the terminal device being included in both the first domain including a plurality of terminals which pass data only between each other and the second domain including a plurality of terminals which pass data only between each other, a domain not permitting transfer of data among terminal devices belonging to different domains, and the method comprising:
duplicating data shared by the first domain or the second domain so as to generate duplicate data associated with the first domain or the second domain;
holding (i) a first domain key which is associated with an identifier for identifying the first domain and is common to the first domain and (ii) a second domain key which is associated with an identifier for identifying the second domain and is common to the second domain;
in the case where the duplicate data is associated with the first domain, (i) specifying the first domain key from among the domain keys held in said holding, based on the identifier for identifying the first domain, and (ii) encrypting the duplicate data using the specified first domain key, so as to generate the encrypted duplicate data, and in the case where the duplicate data is associated with the second domain, (i) specifying the second domain key from among the domain keys held in said holding, based on the identifier for identifying the second domain, and (ii) encrypting the duplicate data using the specified second domain key, so as to generate the encrypted duplicate data;
storing, into a storage medium, the encrypted duplicate data generated in said specifying and encrypting.
decrypting the encrypted duplicate data stored in the storage medium, using the first domain key or the second domain key held by said key holding unit, so as to restore the encrypted duplicate data to the duplicate data,
wherein the data shared by each of the first domain and the second domain indicates (i) a content key which is necessary for using a content that is a digital copyrighted work, and (ii) usage rules,
deleting a part of the duplicate data according to the details of the duplicate data, the deleted part indicating the content key in the duplicate data of the data, and
encrypting the rest of the deleted duplicate data so as to generate the encrypted duplicate data,
communicate with a supplement unit in which the content key is stored, and
supplementing the part deleted to the decrypted data.

19. The data protection method according to Claim 18,
wherein in said storing, an identifier for identifying the first domain key or the second domain key is stored into the storage medium, the first or second domain key being used for encrypting the duplicate data, and the identifier being assigned to the encrypted duplicate data.

20. A program for a terminal device which belongs to a first domain and a second domain, each domain being a group of terminals, to protect data shared by each of the first and second domains, the program causing a computer to execute the data protection method of claim 18.

## Patentansprüche

1. Endgeräteeinrichtung (300), die zu einer ersten Domäne und einer zweiten Domäne gehört, wobei jede Domäne eine logische Gruppe von Endgeräteeinrichtungen in einem Datenverteilungsdienst ist, wobei die erste Domäne mehrere Endgeräte umfasst, die Daten lediglich untereinander weitergeben, und die zweite Domäne mehrere Endgeräteeinrichtungen umfasst, die Daten lediglich untereinander weitergeben, wobei eine Domäne nicht die Übertragung von Daten unter Endgeräteeinrichtungen erlaubt, die zu unterschiedlichen Domänen gehören, wobei die Endgeräteeinrichtung Folgendes umfasst:
eine Domänenschlüssel-Halteeinheit (311), die betriebsfähig ist, um einen ersten Domänenschlüssel zu halten, der der ersten Domäne gemein ist, wobei der erste Domänenschlüssel ein Inhaltsverschlüsselungsschlüssel ist, der erforderlich ist, um digitalen Inhalt zu verwenden, und einer Kennung zum Identifizieren der ersten Domäne zugehörig ist und der ersten Domäne gemein ist, und um einen zweiten Domänenschlüssel zu halten, der der zweiten Domäne gemein ist, wobei der zweite Domänenschlüssel ein Inhaltsverschlüsselungsschlüssel ist, der erforderlich ist, um digitalen Inhalt zu verwenden, und einer Kennung zur Identifizierung der zweiten Domäne zugehörig ist und der zweiten Domäne gemein ist;
eine Datenduplizierungseinheit (303), die betriebsfähig ist, um Daten zu duplizieren, die durch die erste Domäne oder die zweite Domäne gemeinsam verwendet werden, um duplizierte Daten zu erzeugen, die der ersten Domäne oder der zweiten Domäne zugehörig sind;
eine Verschlüsselungseinheit (306), die betriebsfähig ist, um die duplizierten Daten zu verschlüsseln, um verschlüsselte duplizierte Daten zu erzeugen, unter Verwendung (i) des ersten Domänenschlüssels in dem Fall, in dem die duplizierten Daten der ersten Domäne zugehörig sind, oder (ii) des zweiten Domänenschlüssels, in dem Fall, in dem die duplizierten Daten der zweiten Domäne zugehörig sind,
eine Datenspeichereinheit (312), die betriebsfähig ist, um die duplizierten Daten mit der ersten Domäne zu verknüpfen, falls die durch die erste Domäne gemeinsam verwendeten Daten dupliziert sind, oder die duplizierten Daten mit der zweiten Domäne zu verknüpfen, falls die durch die zweite Domäne gemeinsam verwendeten Daten dupliziert sind, und um die verschlüsselten duplizierten Daten in einem Datenträger zu speichern,
eine Entschlüsselungseinheit (306), die betriebsfähig ist, um die verschlüsselten duplizierten Daten, die in dem Datenträger gespeichert sind, unter Verwendung des ersten Domänenschlüssels oder des zweiten Domänenschlüssels, der durch die Schlüsselhalteeinheit gehalten wird, zu entschlüsseln, um die verschlüsselten duplizierten Daten für die duplizierten Daten wiederherzustellen,
wobei die Daten, die durch jede von der ersten Domäne und der zweiten Domäne gemeinsam verwendet werden, (i) einen Inhaltsschlüssel, der zur Verwendung eines Inhalts erforderlich ist, der ein urheberrechtlich geschütztes digitales Werk ist, und (ii) Verwendungsregeln angibt, und
die Duplizierungseinheit (303) einen Teil der duplizierten Daten gemäß den Details der duplizierten Daten löscht, wobei der gelöschte Teil den Inhaltsschlüssel in den duplizierten Daten von den Daten angibt, und
die Verschlüsselungseinheit (306) den Rest der gelöschten duplizierten Daten verschlüsselt, um die verschlüsselten duplizierten Daten zu erzeugen,
wobei die Endgeräteeinrichtung ferner Folgendes umfasst:
eine Ergänzungseinheit (400), die betriebsfähig ist, um (i) mit der Endgeräteeinrichtung zu kommunizieren, die zu der ersten und der zweiten Domäne gehört, (ii) den Inhaltsschlüssel zu speichern und (iii) den durch die Duplizierungseinheit (303) gelöschten Teil zu den durch die Entschlüsselungseinheit (306) entschlüsselten Daten zu ergänzen.

2. Endgeräteeinrichtung nach Anspruch 1,
wobei in dem Fall, in dem die duplizierten Daten der ersten Domäne zugehörig sind, die Datenspeichereinheit in dem Datenträger eine Kennung zum Identifizieren der ersten Domäne speichert, wobei die Kennung den verschlüsselten duplizierten Daten zugewiesen wird, und in dem Fall, in dem die duplizierten Daten der zweiten Domäne zugehörig sind, die Datenspeichereinheit in dem Datenträger eine Kennung zum Identifizieren der zweiten Domäne speichert, wobei die Kennung den verschlüsselten duplizierten Daten zugewiesen wird.

3. Endgeräteeinrichtung nach Anspruch 2,
wobei die Duplizierungseinheit einen Teil der duplizierten Daten gemäß den Details der erzeugten duplizierten Daten löscht und den Rest der duplizierten Daten digital signiert, und
die Datenspeichereinheit die digital signierten duplizierten Daten in dem Datenträger speichert.

4. Endgeräteeinrichtung nach Anspruch 3,
wobei die durch jede von der ersten Domäne und der zweiten Domäne gemeinsam verwendeten Daten (i) einen Inhaltsschlüssel, der zur Verwendung eines Inhalts, der ein urheberrechtlich geschütztes digitales Werk ist, und (ii) Verwendungsregeln angeben, und
die Duplizierungseinheit einen Teil löscht, der den Inhaltsschlüssel in den duplizierten Daten der Daten angibt.

5. Endgeräteeinrichtung nach Anspruch 1,
wobei die Verschlüsselungseinheit den verschlüsselten duplizierten Daten eine Kennung zum Identifizieren des ersten oder zweiten Domänenschlüssels zuweist, der zum Verschlüsseln der duplizierten Daten verwendet wird,
die Speichereinheit die verschlüsselten duplizierten Daten, die der Kennung zugehörig sind, in dem Datenträger speichert, und
die Entschlüsselungseinheit beim Entschlüsseln der verschlüsselten duplizierten Daten, die in dem Datenträger gespeichert sind, (i) den ersten Domänenschlüssel oder den zweiten Domänenschlüssel, der zum Verschlüsseln der duplizierten Daten verwendet wird, auf der Grundlage der den verschlüsselten duplizierten Daten zugewiesenen Kennung angibt und (ii) die verschlüsselten duplizierten Daten unter Verwendung des angegebenen ersten Domänenschlüssels oder zweiten Domänenschlüssels entschlüsselt.

6. Endgeräteeinrichtung nach Anspruch 1,
wobei in dem Fall, in dem die Entschlüsselungseinheit eine Erlaubnis zum Entschlüsseln der verschlüsselten duplizierten Daten von einer Servereinrichtung empfängt, die über eine Kommunikationsleitung verbunden ist, die Entschlüsselungseinheit die verschlüsselten duplizierten Daten entschlüsselt.

7. Endgeräteeinrichtung nach Anspruch 6,
wobei die Entschlüsselungseinheit beim Entschlüsseln der verschlüsselten duplizierten Daten (i) bei der Servereinrichtung anfragt, ob die verschlüsselten duplizierten Daten entschlüsselt werden können oder nicht, und (ii) die verschlüsselten duplizierten Daten in dem Fall entschlüsselt, in dem die Entschlüsselungseinheit eine Antwort empfängt, die angibt, dass die verschlüsselten duplizierten Daten entschlüsselt werden können.

8. Endgeräteeinrichtung nach Anspruch 1, die ferner Folgendes umfasst:
eine Bezugseinheit, die betriebsfähig ist, um zu bewirken, dass ein Benutzer auf die Details der durch die Entschlüsselungseinheit wiederhergestellten duplizierten Daten verwiesen wird.

9. Endgeräteeinrichtung nach Anspruch 1,
wobei die Verschlüsselungseinheit den verschlüsselten duplizierten Daten zusätzliche Informationen zuweist, die Details angeben, die die Handhabung der verschlüsselten duplizierten Daten betreffen, und
die Speichereinheit in dem Datenträger die verschlüsselten duplizierten Daten, denen die zusätzlichen Informationen zugewiesen wurden, speichert.

10. Endgeräteeinrichtung nach Anspruch 1,
wobei die Verschlüsselungseinheit die verschlüsselten duplizierten Daten unter Verwendung einer digitalen Signatur für duplizierte Daten dupliziert, deren Offenbarung erlaubt ist und deren Änderung verboten ist.

11. Endgeräteeinrichtung nach Anspruch 1, die ferner Folgendes umfasst:
eine Kommunikationseinheit, die betriebsfähig ist, um über eine Kommunikationsleitung mit einer Schlüsselservereinrichtung zu kommunizieren, die den ersten Domänenschlüssel und den zweiten Domänenschlüssel verteilt,
wobei die Schlüsselhalteeinheit den ersten Domänenschlüssel und den zweiten Domänenschlüssel von der Schlüsselservereinrichtung über die Kommunikationseinheit erfasst, um die erfassten Schlüssel zu halten.

12. Endgeräteeinrichtung nach Anspruch 11,
wobei die Schlüsselhalteeinheit (i) den ersten Domänenschlüssel und den zweiten Domänenschlüssel bei der Schlüsselservereinrichtung über die Kommunikationseinheit anfordert und (ii) den ersten Domänenschlüssel und den zweiten Domänenschlüssel erfasst, um die erfassten Schlüssel zu halten.

13. Endgeräteeinrichtung nach Anspruch 12,
wobei mindestens einer von dem ersten Domänenschlüssel und dem zweiten Domänenschlüssel ein Verschlüsselungsschlüssel eines symmetrischen Schlüssel-Kryptosystems ist.

14. Datenschutzsystem, das (i) eine erste Domäne und eine zweite Domäne, wobei jede Domäne eine Gruppe von Endgeräteeinrichtungen ist, und eine Servereinrichtung umfasst, die mit jeder von den Endgeräteeinrichtungen kommuniziert, und (ii) Daten schützt, die durch jede von der ersten und der zweiten Domäne gemeinsam verwendet werden,
wobei die Servereinrichtung einen ersten Domänenschlüssel verteilt, der jeder von den Endgeräteeinrichtungen gemein ist, die zu der ersten Domäne gehören, und einen zweiten Domänenschlüssel verteilt, der jeder von den Endgeräteeinrichtungen gemein ist, die zu der zweiten Domäne gehören,
wobei jede von den Endgeräteeinrichtungen eine Endgeräteeinrichtung nach Anspruch 1 ist.

15. Datenschutzsystem nach Anspruch 14,
wobei die Daten, die durch jede von der ersten Domäne und der zweiten Domäne gemeinsam verwendet werden, (i) einen Inhaltsschlüssel, der zum Verwenden eines Inhalts, der ein urheberrechtlich geschütztes digitales Werk ist, und (ii) Verwendungsregeln angeben, und
die Duplizierungseinheit einen Teil löscht, der den Inhaltsschlüssel in den duplizierten Daten von den Daten angibt.

16. Datenschutzsystem nach Anspruch 14,
wobei in dem Fall, in dem die Entschlüsselungseinheit von der Servereinrichtung eine Erlaubnis zur Entschlüsselung der verschlüsselten duplizierten Daten empfängt, die Entschlüsselungseinheit die verschlüsselten duplizierten Daten entschlüsselt.

17. Datenschutzsystem nach Anspruch 16,
wobei beim Entschlüsseln der verschlüsselten duplizierten Daten die Entschlüsselungseinheit (i) bei der Servereinrichtung anfragt, ob die verschlüsselten duplizierten Daten entschlüsselt werden können oder nicht, und (ii) die verschlüsselten duplizierten Daten in dem Fall entschlüsselt, in dem die Entschlüsselungseinheit eine Antwort empfängt, die angibt, dass die verschlüsselten duplizierten Daten entschlüsselt werden können.

18. Datenschutzverfahren, das durch eine Endgeräteeinrichtung nach Anspruch 1 zum Schutz von Daten verwendet wird, die durch eine erste und eine zweite Domäne gemeinsam verwendet werden, wobei die Endgeräteeinrichtung sowohl in der ersten Domäne, die mehrere Endgeräte umfasst, die Daten lediglich untereinander weitergeben, als auch in der zweiten Domäne enthalten ist, die mehrere Endgeräte umfasst, die Daten lediglich untereinander weitergeben, wobei eine Domäne nicht die Übertragung von Daten unter Endgeräteeinrichtungen erlaubt, die zu unterschiedlichen Domänen gehören, und das Verfahren Folgendes umfasst:
Duplizieren von Daten, die durch die erste Domäne oder die zweite Domäne gemeinsam verwendet werden, um duplizierte Daten zu erzeugen, die der ersten Domäne oder der zweiten Domäne zugehörig sind;
Halten (i) eines ersten Domänenschlüssels, der einer Kennung zum Identifizieren der ersten Domäne zugehörig ist und der ersten Domäne gemein ist, und (ii) eines zweiten Domänenschlüssels, der einer Kennung zum Identifizieren der zweiten Domäne zugehörig ist und der zweiten Domäne gemein ist;
in dem Fall, in dem die duplizierten Daten der ersten Domäne zugehörig sind, (i) Angeben des ersten Domänenschlüssels unter den Domänenschlüsseln, die in dem Halten gehalten werden, auf der Grundlage der Kennung zum Identifizieren der ersten Domäne, und (ii) Verschlüsseln der duplizierten Daten unter Verwendung des angegebenen ersten Domänenschlüssels, um die verschlüsselten duplizierten Daten zu erzeugen, und in dem Fall, in dem die duplizierten Daten der zweiten Domäne zugehörig sind, (i) Angeben des zweiten Domänenschlüssels unter den Domänenschlüsseln, die in dem Halten gehalten werden, auf der Grundlage der Kennung zum Identifizieren der zweiten Domäne und (ii) Verschlüsseln der duplizierten Daten unter Verwendung des angegebenen zweiten Domänenschlüssels, um die verschlüsselten duplizierten Daten zu erzeugen;
Speichern der verschlüsselten duplizierten Daten, die bei dem Angeben und Verschlüsseln erzeugt wurden, in einem Datenträger;
Entschlüsseln der verschlüsselten duplizierten Daten, die in dem Datenträger gespeichert sind, unter Verwendung des ersten Domänenschlüssels oder des zweiten Domänenschlüssels, der durch die Schlüsselhalteeinheit gehalten wird, um die verschlüsselten duplizierten Daten für die duplizierten Daten wiederherzustellen,
wobei die durch jede von der ersten Domäne und der zweiten Domäne gemeinsam verwendeten Daten (i) einen Inhaltsschlüssel, der zur Verwendung eines Inhalts, der ein urheberrechtlich geschütztes digitales Werk ist, erforderlich ist, und (ii) Verwendungsregeln angeben,
Löschen eines Teils der duplizierten Daten gemäß den Details der duplizierten Daten, wobei der gelöschte Teil den Inhaltsschlüssel in den duplizierten Daten von den Daten angibt, und
Verschlüsseln des Rests der gelöschten duplizierten Daten, um die verschlüsselten duplizierten Daten zu erzeugen,
Kommunizieren mit einer Ergänzungseinheit, in der der Inhaltsschlüssel gespeichert wird, und
Ergänzen des durch die entschlüsselten Daten gelöschten Teils.

19. Datenschutzverfahren nach Anspruch 18,
wobei bei dem Speichern eine Kennung zum Identifizieren des ersten Domänenschlüssels oder des zweiten Domänenschlüssels in dem Datenträger gespeichert wird, wobei der erste oder zweite Domänenschlüssel zum Verschlüsseln der duplizierten Daten verwendet wird und die Kennung den verschlüsselten duplizierten Daten zugewiesen wird.

20. Programm für eine Endgeräteeinrichtung, die zu einer ersten Domäne und einer zweiten Domäne gehört, wobei jede Domäne eine Gruppe von Endgeräten ist, um Daten zu schützen, die durch jede von der ersten und der zweiten Domäne gemeinsam verwendet werden, wobei das Programm bewirkt, dass ein Computer das Datenschutzverfahren nach Anspruch 18 ausführt.

## Revendications

1. Dispositif terminal (300) qui appartient à un premier domaine et un second domaine, chaque domaine étant un groupe logique de dispositifs terminaux dans un service de distribution de données, le premier domaine incluant une pluralité de terminaux qui se passent des données uniquement entre eux et le second domaine incluant une pluralité de terminaux qui se passent des données uniquement entre eux, un domaine ne permettant pas le transfert de données parmi des dispositifs terminaux appartenant à des domaine différents, le dispositif terminal comprenant :
une unité de conservation de clé de domaine (311) exploitable pour conserver une première clé de domaine commune au premier domaine, la première clé de domaine étant une clé de chiffrement de contenu requise afin d'utiliser un contenu numérique et étant associée à un identificateur pour identifier le premier domaine et étant commune au premier domaine, et pour conserver une seconde clé de domaine commune au second domaine, la seconde clé de domaine étant une clé de chiffrement de contenu requise afin d'utiliser un contenu numérique et étant associée à un identificateur pour identifier le second domaine et étant commune au second domaine ;
une unité de duplication de données (303) exploitable pour dupliquer des données partagées par le premier domaine ou le second domaine de manière à générer des données en double associées au premier domaine ou au second domaine ;
une unité de chiffrement (306) exploitable pour chiffrer les données en double de manière à générer des données en double chiffrées, en utilisant (i) la première clé de domaine dans le cas où les données en double sont associées au premier domaine, ou (ii) la seconde clé de domaine dans le cas où les données en double sont associées au second domaine,
une unité de stockage de données (312) exploitable pour associer les données en double au premier domaine dans le cas où les données partagées par le premier domaine sont dupliquées ou associer les données en double au second domaine dans le cas où les données partagées par le second domaine sont dupliquées, et pour stocker les données en double chiffrées dans un support de stockage,
une unité de déchiffrement (306) exploitable pour déchiffrer les données en double chiffrées stockées dans le support de stockage, en utilisant la première clé de domaine ou la seconde clé de domaine conservée par ladite unité de conservation de clé, de manière à restaurer les données en double chiffrées en données en double,
dans lequel les données partagées par chacun du premier domaine et du second domaine indiquent (i) une clé de contenu qui est nécessaire pour utiliser un contenu qui est une oeuvre protégée par le droit d'auteur numérique, et (ii) des règles d'utilisation, et
ladite unité de duplication (303) supprime une partie des données en double selon les détails des données en double, la partie supprimée indiquant la clé de contenu dans les données double des données, et
ladite unité de chiffrement (306) chiffre le reste des données en double supprimées de manière à générer les données en double chiffrées,
ledit dispositif terminal comprenant en outre
une unité de supplément (400) exploitable pour (i) communiquer avec le dispositif terminal appartenant auxdits premier et second domaines, (ii) stocker la clé de contenu, et (iii) apporter en supplément la partie supprimée par ladite unité de duplication (303) aux données déchiffrées par ladite unité de déchiffrement (306).

2. Dispositif terminal selon la revendication 1,
dans lequel dans le cas où les données en double sont associées au premier domaine, ladite unité de stockage de données stocke, dans le support de stockage, un identificateur pour identifier le premier domaine, l'identificateur étant assigné aux données en double chiffrées, et dans le cas où les données en double sont associées au second domaine, ladite unité de stockage de données stocke, dans le support de stockage, un identificateur pour identifier le second domaine, l'identificateur étant assigné aux données en double chiffrées.

3. Dispositif terminal selon la revendication 2,
dans lequel ladite unité de duplication supprime une partie des données en double selon les détails des données en double générées, et signe numériquement le reste des données en double, et
ladite unité de stockage de données stocke les données en double signées numériquement dans le support de stockage.

4. Dispositif terminal selon la revendication 3,
dans lequel les données partagées par chacun du premier domaine et du second domaine indiquent (i) une clé de contenu qui est nécessaire pour utiliser un contenu qui est une oeuvre protégée par le droit d'auteur numérique, et (ii) des règles d'utilisation, et
ladite unité de duplication supprime une partie indiquant la clé de contenu dans les données en double des données.

5. Dispositif terminal selon la revendication 1,
dans lequel ladite unité de chiffrement assigne, aux données en double chiffrées, un identificateur pour identifier la première ou seconde clé de domaine utilisée pour chiffrer les données en double,
ladite unité de stockage stocke, dans le support de stockage, les données en double chiffrées assignées avec l'identificateur, et
lors du déchiffrement des données en double chiffrées stockées dans le support de stockage, ladite unité de déchiffrement (i) spécifie la première clé de domaine ou la seconde clé de domaine utilisée pour chiffrer les données en double, sur la base de l'identificateur assigné aux données en double chiffrées, et (ii) déchiffre les données en double chiffrées en utilisant la première clé de domaine ou la seconde clé de domaine spécifiée.

6. Dispositif terminal selon la revendication 1,
dans lequel dans le cas où ladite unité de déchiffrement reçoit une permission pour déchiffrer les données en double chiffrées en provenance d'un dispositif serveur connecté via une ligne de communication, ladite unité de déchiffrement déchiffre les données en double chiffrées.

7. Dispositif terminal selon la revendication 6,
dans lequel lors du déchiffrement des données en double chiffrées, ladite unité de déchiffrement (i) interroge le dispositif serveur si les données en double chiffrées peuvent être déchiffrées ou non, et (ii) déchiffre les données en double chiffrées dans le cas où ladite unité de déchiffrement reçoit une réponse indiquant que les données en double chiffrées peuvent être déchiffrées.

8. Dispositif terminal selon la revendication 1, comprenant en outre :
une unité de référence exploitable pour amener un utilisateur à se référer aux détails des données en double restaurées par ladite unité de déchiffrement.

9. Dispositif terminal selon la revendication 1,
dans lequel ladite unité de chiffrement assigne, aux données en double chiffrées, des informations additionnelles indiquant des détails concernant la prise en charge des données en double chiffrées, et
ladite unité de stockage stocke, dans le support de stockage, les données en double chiffrées assignées avec les informations additionnelles.

10. Dispositif terminal selon la revendication 1,
dans lequel ladite unité de chiffrement génère les données en double chiffrées en utilisant une signature numérique pour des données en double dont la divulgation est permise et la modification est interdite.

11. Dispositif terminal selon la revendication 1, comprenant en outre
une unité de communication exploitable pour communiquer, via une ligne de communication, avec un dispositif serveur de clé qui distribue la première clé de domaine et la seconde clé de domaine,
dans lequel ladite unité de conservation de clé acquiert la première clé de domaine et la seconde clé de domaine à partir du dispositif serveur de clé via l'unité de communication de manière à conserver les clés acquises.

12. Dispositif terminal selon la revendication 11,
dans lequel ladite unité de conservation de clé (i) demande la première clé de domaine et la seconde clé de domaine au dispositif de serveur de clé via ladite unité de communication, et (ii) acquiert la première clé de domaine et la seconde clé de domaine de manière à conserver les clés acquises.

13. Dispositif terminal selon la revendication 12,
dans lequel au moins une de la première clé de domaine et de la seconde clé de domaine est une clé de chiffrement d'une cryptographie à clé symétrique.

14. Système de protection de données qui (i) comprend un premier domaine et un second domaine, chaque domaine étant un groupe de dispositifs terminaux, et un dispositif serveur qui communique avec chacun desdits dispositifs terminaux, et (ii) protège des données partagées par chacun des premier et second domaines,
dans lequel ledit dispositif serveur distribue une première clé de domaine commune à chacun desdits dispositifs terminaux appartenant audit premier domaine, et distribue une seconde clé de domaine commune à chacun desdits dispositifs terminaux appartenant audit second domaine,
chacun des dispositifs terminaux étant un dispositif terminal selon la revendication 1.

15. Système de protection de données selon la revendication 14,
dans lequel les données partagées par chacun dudit premier domaine et dudit second domaine indiquent (i) une clé de contenu qui est nécessaire pour utiliser un contenu qui est une oeuvre protégée par le droit d'auteur numérique, et (ii) des règles d'utilisation, et
ladite unité de duplication supprime une partie indiquant la clé de contenu dans les données en double des données.

16. Système de protection de données selon la revendication 14,
dans lequel dans le cas où ladite unité de déchiffrement reçoit, en provenance dudit dispositif serveur, une permission pour déchiffrer les données en double chiffrées, ladite unité de déchiffrement déchiffre les données en double chiffrées.

17. Système de protection de données selon la revendication 16,
dans lequel lors du déchiffrement des données en double chiffrées, ladite unité de déchiffrement (i) interroge ledit dispositif serveur si les données en double chiffrées peuvent être déchiffrées ou non, et (ii) déchiffre les données en double chiffrées dans le cas où ladite unité de déchiffrement reçoit une réponse indiquant que les données en double chiffrées peuvent être déchiffrées.

18. Procédé de protection de données utilisé par un dispositif terminal selon la revendication 1 pour protéger des données partagées par des premier et second domaines, le dispositif terminal étant inclus à la fois dans le premier domaine incluant une pluralité de terminaux qui se passent des données uniquement entre eux et le second domaine incluant une pluralité de terminaux qui se passent des données uniquement entre eux, un domaine ne permettant pas le transfert de données parmi des dispositif terminaux appartenant à des domaines différents, et le procédé comprenant :
la duplication de données partagées par le premier domaine ou le second domaine de manière à générer des données en double associées au premier domaine ou au second domaine ;
la conservation (i) d'une première clé de domaine qui est associée à un identificateur pour identifier le premier domaine et est commune au premier domaine et (ii) d'une seconde clé de domaine qui est associée à un identificateur pour identifier le second domaine et est commune au second domaine ;
dans le cas où les données en double sont associées au premier domaine, (i) la spécification de la première clé de domaine parmi les clés de domaine conservées à ladite conservation, sur la base de l'identificateur pour identifier le premier domaine, et (ii) le chiffrement des données en double en utilisant la première clé de domaine spécifiée, de manière à générer les données en double chiffrées, et dans le cas où les données en double sont associées au second domaine, (i) la spécification de la seconde clé de domaine parmi les clés de domaine conservées à ladite conservation, sur la base de l'identificateur pour identifier le second domaine, et (ii) le chiffrement des données en double en utilisant la seconde clé de domaine spécifiée, de manière à générer les données en double chiffrées ;
le stockage, dans un support de stockage, des données en double chiffrées générées à ladite spécification et audit chiffrement,
le déchiffrement des données en double chiffrées stockées dans le support de stockage, en utilisant la première clé de domaine ou la seconde clé de domaine conservée par ladite unité de conservation de clé, de manière à restaurer les données en double chiffrées en données en double,
dans lequel les données partagées par chacun du premier domaine et du second domaine indiquent (i) une clé de contenu qui est nécessaire pour utiliser un contenu qui est une oeuvre protégée par le droit d'auteur numérique, et (ii) des règles d'utilisation,
la suppression d'une partie des données en double selon les détails des données en double, la partie supprimée indiquant la clé de contenu dans les données en double des données, et
le chiffrement du reste des données en double supprimées de manière à générer les données en double chiffrées,
la communication avec une unité de supplément dans laquelle la clé de contenu est stockée, et
le fait d'apporter en supplément la partie supprimée aux données déchiffrées.

19. Procédé de protection de données selon la revendication 18,
dans lequel audit stockage, un identificateur pour identifier la première clé de domaine ou la seconde clé de domaine est stocké dans le support de stockage, la première ou seconde clé de domaine étant utilisée pour chiffrer les données en double, et l'identificateur étant assigné aux données en double chiffrées.

20. Programme pour un dispositif terminal qui appartient à un premier domaine et un second domaine, chaque domaine étant un groupe de terminaux, pour protéger des données partagées par chacun des premier et second domaines, le programme amenant un ordinateur à exécuter le procédé de protection de données de la revendication 18.
